# EUROPEAN PATENT SPECIFICATION

(11) **EP 3 554 161 B1**
(45) Date of publication and mention of the grant of the patent: **29.07.2026**
(21) Application number: 17889944.9
(22) Date of filing: 29.12.2017
(51) Int. Cl.: H04W 72/0446, H04W 72/23

(54) **DATA TRANSMITTING/RECEIVING METHOD AND DEVICE, STORAGE MEDIUM, AND PROGRAM PRODUCT**
DATENSENDE-/-EMPFANGSVERFAHREN UND -VORRICHTUNG, SPEICHERMEDIUM UND PROGRAMMPRODUKT
PROCÉDÉ ET DISPOSITIF DE TRANSMISSION/RÉCEPTION DE DONNÉES, SUPPORT DE STOCKAGE, ET PRODUIT PROGRAMME D'ORDINATEUR

(30) Priority: 06.01.2017 CN 201710011327
(43) Date of publication of application: 16.10.2019
(73) Proprietor: Huawei Technologies Co., Ltd., Longgang District Shenzhen, Guangdong 518129 (CN)
(72) Inventor: GUAN, Lei, Shenzhen Guangdong 518129 (CN); YAN, Zhiyu, Shenzhen Guangdong 518129 (CN)
(74) Representative: Maiwald GmbH
(86) International application number: PCT/CN2017/119783
(87) International publication number: WO 2018/126996

(56) References cited:
- WO-A1-2016/144002
- CN-A- 102 469 048
- CN-A- 106 063 152
- CN-A- 106 255 210
- ZTE ZTE MICROELECTRONICS: "NR DL Control Channel Structure", vol. RAN WG1, no. Reno, USA; 20161114 - 20161118, 13 November 2016 (2016-11-13), XP051175273, Retrieved from the Internet <URL:http://www.3gpp.org/ftp/Meetings_3GPP_SYNC/RAN1/Docs/> [retrieved on 20161113]
- NTT DOCOMO INC: "DL control channel design for NR", vol. RAN WG1, no. Reno, USA; 20161114 - 20161118, 13 November 2016 (2016-11-13), XP051176658, Retrieved from the Internet <URL:http://www.3gpp.org/ftp/Meetings_3GPP_SYNC/RAN1/Docs/> [retrieved on 20161113]
- MEDIATEK INC: "Flexible Frame Structure for New Radio Access Technology", vol. RAN WG1, no. Gothenburg, Sweden; 20160822 - 20160826, 21 August 2016 (2016-08-21), XP051125957, Retrieved from the Internet <URL:http://www.3gpp.org/ftp/Meetings_3GPP_SYNC/RAN1/Docs/> [retrieved on 20160821]
- INTEL CORPORATION: "NR HARQ and scheduling timing", vol. RAN WG1, no. Lisbon, Portugal; 20161010 - 20161014, 9 October 2016 (2016-10-09), XP051149581, Retrieved from the Internet <URL:http://www.3gpp.org/ftp/Meetings_3GPP_SYNC/RAN1/Docs/> [retrieved on 20161009]
- INTEL CORPORATION: "On NR physical downlink control channel", vol. RAN WG1, no. Lisbon, Portugal; 20161010 - 20161014, 9 October 2016 (2016-10-09), XP051149578, Retrieved from the Internet <URL:http://www.3gpp.org/ftp/Meetings_3GPP_SYNC/RAN1/Docs/> [retrieved on 20161009]

## Description

### TECHNICAL FIELD

This application relates to the field of wireless communications technologies, and in particular, to a data receiving/transmitting method, a device and a computer storage medium.

### BACKGROUND

In a new radio (English full name: New Radio, NR for short) system, both a base station and a terminal device agree, in advance, on a subframe in which signaling is listened to and data is received. The base station does not need to indicate, to the terminal device later, the subframe in which the signaling is listened to or the data is received, provided that the terminal device listens to the signaling or receives the data in the agreed-on subframe.
The Article by ZTE MICROELECTRONICS, titled "NR DL Control Channel Structure", published vol. RAN WG1, no. Reno, USA; 20161114 - 20161118, (20161113), 3GPP DRAFT; R1-1611292 NR PDCCH STRUCTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE describes NR DL control channel structure.
The Article by NTT DOCOMO INC, titled "DL control channel design for NR", published on vol. RAN WG1, no. Reno, USA; 20161114 - 20161118, (20161113), 3GPP DRAFT; R1-1612715, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, describes systems and methods for DL control channel design for NR.

However, the terminal device can perform a receiving/transmitting operation only in a fixed subframe. Therefore, some subframes may be idle, and the terminal device can only continue to wait and can listen to signaling or receive/transmit data only in a configured subframe. It can be learned that these idle subframes are wasted. The base station does not perform dynamic scheduling based on current resource allocation, and does not dynamically indicate, to the terminal device in real time, a subframe in which signaling is listened to or data is received, either. It can be learned that currently, this fixed listening or receiving mechanism is not perfect.

### SUMMARY

The invention is defined by the appended independent claims and further embodiments are described by the dependent claims.

Downlink data delivered by a base station, and receiving a data channel and receiving data are not specifically distinguished in this application.

Compared with an existing mechanism, in this application, the terminal device may receive, in the first time unit, the first control information dynamically delivered by the access network device, and then receive the first data channel based on the first start symbol indicated by the first control information. In this mechanism, in a process of listening to a channel, the access network device can dynamically perform resource scheduling on the terminal device, so that the terminal device can listen to a control channel and receive a data channel without being restricted to using some fixed subframes, thereby improving data receiving flexibility. This solution may be further combined with a mechanism for receiving data in a fixed subframe. The access network device may dynamically schedule the terminal device in real time based on a current resource allocation status, and may also schedule, when determining that some subframes are idle, these idle subframes to the terminal device for use on the basis of sending signaling or data in the fixed subframe, to reduce waiting duration of the terminal device, improve resource utilization and resource scheduling flexibility, and further improve a resource scheduling mechanism.

In some possible designs, in this scheduling mechanism for dynamically indicating the first start symbol, a resource released by another terminal device in the NR system can be allocated and indicated to the foregoing terminal device, to improve resource utilization; or an idle resource in an LTE system in which the first carrier is multiplexed can be allocated and indicated to the foregoing terminal device, to improve a resource multiplexing rate.

The first time unit may be a basic time domain scheduling unit such as a subframe, a slot, or a short time interval TTI, or may be a mini-slot in the NR system or a short TTI in the LTE system. For example, the first time unit has a length of two or three orthogonal frequency division multiplexing OFDM symbols. The slot is used as an example below in this application. For example, one slot includes seven OFDM symbols, and different subcarrier spacings may be configured for the terminal device in the NR system. For example, a slot in a subcarrier spacing of 15 kilohertz KHz is 0.5 millisecond ms, and a slot in a subcarrier spacing of 30 KHz is 0.25 ms. UE in LTE can only assume the subcarrier spacing of 15 KHz.

The first carrier is a cell or carrier serving the terminal device. The carrier and the cell may not be distinguished in this application, and an example in which the first carrier is the carrier serving the terminal device may be used in this application. A bandwidth of the first carrier may be a carrier bandwidth supported by the LTE system. For example, of 80 megahertz MHz, one frequency part of 20 MHz or two frequency parts of 20 MHz may each be an LTE bandwidth for supporting a terminal device in the LTE system.

The first start symbol refers to a start moment at which the terminal device receives the first data channel in time domain. For example, the access network device may instruct the terminal device to listen to a control channel or to receive a data channel starting from a symbol 3 in a subframe. In this case, the terminal device listens to the control channel or receives the data channel on the corresponding symbol.

In some possible designs, a selection rule of the first start symbol may be further pre-configured, so that the terminal device can properly listen to signaling and receive data. The following two rules may be mainly configured based on an application scenario:
(1) The first start symbol is a first candidate symbol, and the first candidate symbol may be earlier in time domain than a first start control symbol on which the first control information is received.
   Optionally, the first candidate symbol may be in the first time unit, and the first start symbol may be later than a first symbol in the first time unit. The terminal device may receive the first control information and the first data channel in the first time unit, and obtain correct first control information and data through demodulation after caching the first control information and the data carried on the first data channel, to complete proper receiving.
(2) The first start symbol is a second candidate symbol, and the second candidate symbol may be aligned with the first start control symbol in time domain, or the second candidate symbol may be later than the first start control symbol in time domain.

In some possible designs, before the terminal device receives the first control information on the first carrier, the terminal device may further obtain, from the access network device, frequency domain configuration information of a control channel corresponding to the first control information, where the frequency domain configuration information may include information indicating a control frequency domain area of the control channel corresponding to the first control information.

In some possible designs, the first control information is further used to indicate first transmission duration for which the first data channel is received, or indicate an end symbol on which the first data channel is received, and the end symbol is a symbol in the first time unit or a symbol in at least one time unit after the first time unit. The terminal device may receive, by scheduling a single slot or a plurality of slots, control information and a data channel in a time unit other than the first time unit with reference to a scheduling manner of the first time unit, to dynamically schedule a plurality of time units.

In some possible designs, scheduling and receiving may be performed in the NR system based on a time domain scheduling unit, where the time domain scheduling unit includes at least two time units, each time unit includes at least two symbols in time domain, and indexes of the symbols are arranged in time domain ascending order. In this application, a plurality of time units may be centrally scheduled, or different time units may be independently scheduled, to adapt to a dynamic change of resource allocation or adapt to a change of a status of the first carrier. Specifically, the terminal device may further receive, on the first carrier in a second time unit after the first time unit is scheduled, second control information sent by the access network. Similarly, the second control information is used to indicate a second start symbol on which a second data channel is received. It should be noted that the first time unit and the second time unit in this application may be any time unit, and the first time unit and the second time unit may be in a same time domain scheduling unit, or may be in different time domain scheduling units. Optionally, the first time unit may be a 1^{st} time unit, and the second time unit may be any time unit after the 1^{st} time unit, for example, a 2^{nd} time unit.

The terminal device receives, in the second time unit, the second data channel on the first carrier starting from the second start symbol.

A start symbol in each time unit is independently configured, so that independent scheduling can be implemented, and dynamic scheduling and receiving are performed based on a current resource allocation status, to effectively improve resource utilization and resource scheduling flexibility.

In some possible designs, the second time unit meets one of the following items:
the second time unit is later than the first time unit, and belongs to a same time domain scheduling unit as the first time unit, where the time domain scheduling unit is a basic scheduling time unit in an LTE system; or
the second time unit is later than the first time unit, and belongs to a different time domain scheduling unit from the first time unit.

In some possible designs, for example, in a scenario in which the first carrier is shared by the LTE system and NR, when a cell in the LTE system is enabled, the first n symbols in the first time unit are occupied and are used as a control area, and the control area is used to carry an LTE-PDCCH. When the NR system is configured, a signal or a channel in the LTE system needs to be bypassed, so that the LTE system and the NR system coexist on the first carrier. When the LTE system is bypassed, the access network device may configure, on a symbol in the first time unit, the first start symbol in the NR system based on a symbol occupied by a control area in the first time unit in the current LTE system, and bypass the symbol occupied by the control area in the LTE system, so that the terminal device only needs to receive a control channel starting from an indicated start control symbol, and receive a data channel starting from the indicated first start symbol.

In some possible designs, because in a same time domain scheduling unit in the LTE system, only a first time unit has a control area, and a subsequent time unit has no control area, when a PDCCH in the LTE system is bypassed, the NR system receives a control channel and a data channel in each time unit starting from a fixed symbol. Considering resource multiplexing, a scheduling mechanism in which the access network device dynamically indicates a start control symbol on which the control channel is received and a start symbol on which the data channel is received may be further combined, and is mainly described below in the following two aspects:

In one aspect, if the first three symbols occupied by a control area in a first slot are configured in the LTE system, the NR system may be configured to receive the control channel starting from a fourth symbol. However, in a second slot, because the LTE system has no control area, if the NR system is still configured to receive the control channel starting from the fourth symbol, the first three symbols in the second slot are not used, thereby causing a resource waste.

Therefore, considering resource utilization, information that the control channel starts to be received may be independently configured for a time unit after the first time unit in the NR system. For example, the access network device may independently configure, for the terminal device, both a second start control symbol on which the second control information is received in the second time unit and the first start control symbol on which the first control information is received. The second start control symbol may be configured as a first symbol in the second time unit. In this way, in the first time unit, the terminal device in the NR system can use an idle resource that is not used in the LTE system, to improve a resource multiplexing rate.

In another aspect, in some time domain scheduling units in the LTE system, when a PCFICH dynamically indicates that one symbol is occupied by a control area in the LTE system, if an NR-PDCCH and an NR-PDSCH are still received based on configurations of the previous time domain scheduling units starting from a fourth symbol, a second symbol and a third symbol are wasted. In this case, the access network device may dynamically change the start control symbol on which the control information is received, and may configure the second start control symbol as a symbol other than the first symbol in the second time unit, so that the terminal device can dynamically change the start control symbol on which the control information is received or the start symbol on which the data channel is received. For example, when the LTE system and the NR system coexist on the first carrier, the access network device can dynamically adjust, based on a quantity of symbols dynamically indicated by the PCFICH in the LTE system, the start control symbol on which the control channel is received in the NR system, to break through a limitation that the terminal device can receive the control channel only on a fixed symbol, and also improve resource utilization to some extent.

When the NR-PDCCH indicates the first start symbol, a start symbol on the NR-PDSCH may be specifically implicitly corresponded to by using a display bit or a display state on the NR-PDCCH or a parameter such as a resource location occupied by the NR-PDCCH.

In some possible designs, similar to the first time unit, the following rule may also be configured: The second start symbol is later than the second start control symbol in time domain, or is aligned with the second start control symbol in time domain. For a time unit in each time domain scheduling unit, the rule is also applicable, and is not described again.

In some possible designs, different time units are independently configured, so that a time domain location of the first start symbol in the first time unit can be the same as or different from a time domain location of the second start symbol in the second time unit. When the quantity of symbols indicated by the PCFICH in the LTE system dynamically changes, or when an active state of the cell in the LTE system deployed on the first carrier changes, a configuration of a current time unit or a configuration of a subsequent time unit may dynamically change. After the configuration dynamically changes, start symbols on which the terminal device receives the first data channel in the different time units are different.

For example, in a first slot, when the PCFICH in the LTE system indicates that there are three symbols on the LTE-PDCCH, a corresponding start control symbol on which the NR-PDCCH is configured in the NR system is a fourth symbol. In a second slot, when the PCFICH in the LTE system indicates that there are two symbols on the LTE-PDCCH, a corresponding start control symbol on which the NR-PDCCH is configured in the NR system may be a third symbol. It can be learned from the foregoing description that in this independently configured scheduling manner, resource utilization can be improved, and scheduling flexibility can also be improved.

In some possible designs, even if a corresponding first start symbol and a corresponding first start control symbol are configured in the first time unit, considering a scenario in which the LTE system and the NR system are jointly deployed on the first carrier, the active state of the cell in the LTE system may change. Because a change of the active state of the cell in the LTE system may affect data receiving of the terminal device in the NR system, for the first carrier, the cell in the LTE system may be in an enabled state or a disabled state, and the terminal device in the NR system may always be in an active state. There are mainly the following two scenarios for impact of the state of the cell in LTE on data receiving of the terminal device in the NR system:

Scenario 1: If the terminal device is in an active state of UE that is in NR and that is in an enabled state of UE in LTE, the terminal device needs to consider bypassing a signal or a channel in the LTE system, and may further consider resource multiplexing with the LTE system. Similarly, the active state described in the scenario 1 may be briefly referred to as a first active state.

Scenario 2: If the cell in LTE is in the disabled state and the terminal device in the NR system is in the active state, the terminal device may use the first carrier more cleanly, for example, there is no need to consider, on the NR-PDCCH, bypassing a control area, a CRS, and the like in LTE. For ease of description, the active state described in the scenario 2 may be briefly referred to as a second active state.

In the scenario 1 and the scenario 2, resource allocation on the first carrier correspondingly changes, to ensure higher resource utilization. When the active state of the terminal device switches, the terminal device also needs to correspondingly change, based on a change of the active state, the start control symbol on which the control channel is received and the start symbol on which the data channel is received. In this case, the terminal device receives, on the first carrier in the first time unit, third control information sent by the access network device, where the third control information is used to indicate a third start symbol on which a third data channel is received; and then the terminal device receives the third data channel on the first carrier starting from the third start symbol.

In some possible designs, corresponding to the scenario 1 and the scenario 2, the terminal device may determine the first active state or the second active state by using media access control MAC signaling or physical layer signaling sent by the access network device because it is considered that an effective time of the signaling needs to match at least a switching time of enabling and disabling an LTE carrier, and the LTE carrier is enabled and disabled by using the MAC signaling. Resource configurations used by the terminal device to receive control information are different for different active states. Specifically, in the first time unit, the first control information is received based on a resource configuration, and the resource configuration may include at least one of the first start control symbol on which the first control information is received, a subcarrier spacing, and information about rate matching of a reference signal. The third control information may be received based on another resource configuration, and the another resource configuration may include at least one of a start control symbol on which the third control information is received, a subcarrier spacing, and information about rate matching of a reference signal.

Specifically, the information about the rate matching of the reference signal is corresponding to a resource location of a reference signal in the LTE system, for example, a cell-specific reference signal or a channel state information measurement reference signal in the LTE system. The rate matching herein means that when sending a control channel or a data channel in NR, the access network device needs to bypass the reference signal when mapping a time-frequency resource, and the terminal device in NR also needs to correspondingly bypass the reference signal when receiving the control channel or the data channel. This operation of bypassing the reference signal is referred to as a rate matching and rate de-matching process.

In an effective period of the MAC signaling or the physical layer signaling, to be specific, in a state switching process, the terminal device changes, based on a corresponding resource configuration, the start control symbol on which the control channel is received and the start symbol on which the data channel is received. To maintain smooth switching, the following rules may also be set:

Rule 1: A currently used resource configuration keeps unchanged during switching of the active state.

Specifically, the terminal device may keep the resource configuration unchanged when a status of the first carrier switches between the first active state and the second active state. To be specific, the terminal device still uses, during switching of the active state, the current resource configuration to receive the control channel and the data channel, instead of immediately using, during switching, the another resource configuration to receive the control channel and the data channel.

Optionally, the another resource configuration may alternatively be a first candidate resource configuration or a second candidate resource configuration, the first candidate resource configuration corresponds to the first active state, and the second candidate resource configuration corresponds to the second active state.

When switching from the first active state to the second active state, the terminal device can maintain, by setting the rule 1, that a manner of receiving a part of control channels in the first time unit does not change with a change of the active state, so that smooth switching can be implemented during the change of the active state.

Rule 2: Resource allocation information is indicated based on a frequency domain range of the first carrier to ensure smooth switching.

In some possible designs, the first control information may further include first resource allocation information of the first data channel, the second control information may include second resource allocation information of the second data channel, and the third control information includes third resource allocation information of the third data channel. An indication of the first resource allocation information is based on a first frequency domain range of the first carrier, an indication of the second resource allocation information is based on a second frequency domain range of the first carrier, and an indication of the third resource allocation information is based on a third frequency domain range of the first carrier.

The first frequency domain range is different from the second frequency domain range, and/or the first frequency domain range is different from the third frequency domain range.

The first frequency domain range keeps unchanged when a status of the first carrier switches between the first active state and the second active state. To be specific, the terminal device continues to use the current first frequency domain range during switching of the active state, instead of immediately using, during switching, a new frequency domain range to receive the control channel and the data channel. The second frequency domain range is a first candidate frequency domain range or a second candidate frequency domain range, the first candidate frequency domain range corresponds to the first active state, and the second candidate frequency domain range corresponds to the second active state.

It can be maintained, by setting the rule 2, that the terminal device does not change a currently used frequency domain range in the effective period of the MAC signaling or the physical layer signaling, but changes the used frequency domain range based on an indication of the resource allocation information after the MAC signaling or the physical layer signaling takes effect. Therefore, when switching from the first active state to the second active state, the terminal device can maintain that a manner of resource allocation on a part of control channels in the first time unit does not change with a change of the active state, so that smooth switching can be implemented during the change of the active state. For example, a total bandwidth is 40 mega M, a bandwidth originally allocated to the NR system is 40 M, and a bandwidth originally allocated to the LTE system is 20 M. When the last 20 M bandwidth is occupied by the current LTE system, only the first 20 M bandwidth can be used by the NR system. After the cell in the LTE system deployed on the first carrier is disabled, the full bandwidth (namely, 40 M) on the first carrier can be used by the NR system. However, after the cell in the LTE system is disabled, in a process in which the terminal device is notified of the MAC signaling, the terminal device first still continues to use the first 20 M bandwidth, and then uses the full 40 M bandwidth after the MAC signaling takes effect. In this way, smooth switching can be ensured during a bandwidth change.

In some possible designs, in this application, it may be considered that when the terminal device is notified of a change of the active state by using the MAC signaling or the physical layer signaling, the access network device may have delivered signaling whose status changes to the terminal device, but the terminal device does not receive the delivered signaling, and still continues to maintain a current scheduling manner and a current receiving manner, thereby causing inconsistent understanding of the active state of the first carrier by the access network device and the terminal device. To resolve this problem, in the rule 1, the currently used resource configuration keeps unchanged during switching of the active state, so that it can continue to maintain that the terminal device properly receives the control channel, and receiving of the control channel can be used to schedule receiving of the data channel during switching of the active state, to avoid unsmooth switching due to the inconsistent understanding of the active state of the first carrier by the access network device and the terminal device.

In some possible designs, when the LTE system and the NR system are deployed on the first carrier, scheduling may be performed in the LTE system based on a short transmission time interval TTI, and scheduling may be performed in the NR system based on a mini-slot. Because a time granularity scheduled in the foregoing two communications systems in which the first carrier is multiplexed affects complexity of monitoring the control channel, an LTE-PDCCH is bypassed in a first slot, and a first symbol in a second slot is used as a start control symbol on which an NR-PDCCH is received to ensure that the first carrier is normally multiplexed in the LTE system and the NR system, and an idle resource in the LTE system further needs to be dynamically scheduled to improve resource utilization. In this case, when scheduling is performed in the LTE system based on a TTI and scheduling is performed in the NR system based on the mini-slot, the terminal device may monitor, at an equal time domain interval, a control channel corresponding to the first control information, to reduce complexity of monitoring the control channel by the terminal device in the NR system. For example, the terminal device may be set to monitor an NR-PDCCH once every two symbols, and monitor the NR-PDCCH only on a symbol whose symbol index is an even number in a subframe.

In this application, considering that the NR system multiplexes a resource scheduled based on the short TTI with the LTE system, or one NR-PDSCH is prevented from occupying a part of each of two short TTIs in LTE, to be specific, a symbol occupied by one NR-PDSCH is aligned with one short TTI in LTE in time domain to a greatest extent, and a resource that is not used in the LTE system when a quantity of symbols dynamically indicated by the PCFICH changes is fully used, it may be further specified that a first start symbol on the NR-PDSCH is earlier than a first start control symbol on an NR-PDCCH corresponding to the NR-PDSCH.

For example, it is specified that in the NR system, the terminal device performs scheduling by using two symbols as one mini-slot, for example, separately performs scheduling by using a symbol whose index is 0 (briefly referred to as #0 below, and other symbols are similar) and #1, #1 and #2, #3 and #4, or the like as one mini-slot. In addition, it is specified that in the NR system, the terminal device monitors the NR-PDCCH on an even-numbered symbol such as #0, #2, or #4. If #0 and #2 are occupied by the LTE system, the terminal device in the NR system can monitor the NR-PDCCH only starting from #4. If the access network device learns that the quantity of symbols dynamically indicated by the PCFICH in the LTE system changes from 3 to 2, the terminal device in the NR system can monitor the NR-PDCCH starting from #2. In this way, the resource that is not used in the LTE system can be fully used, and the resource can also be efficiently multiplexed. It can be learned from the foregoing description that the first start symbol is dynamically indicated and the control channel is monitored at an equal interval, so that the NR system can normally schedule a subframe with the LTE system and flexibly multiplex a resource scheduled based on the short TTI with the LTE system.

A second aspect provides a data sending method. The method may be applied to an access network device that schedules a terminal device in a new radio NR system, and the method may include:
sending, by the access network device, first control information to the terminal device on a first carrier in a first time unit, where the first control information is used to instruct the terminal device to receive, in the first time unit or a time unit after the first time unit, the first data channel on the first carrier starting from a first start symbol; and
then sending, by the access network device in the first time unit, the first data channel on the first carrier starting from the first start symbol.

Compared with an existing mechanism, in this application, the access network device dynamically indicates, to the terminal device in each time unit, the first start symbol on which the first data channel is received, so that the terminal device can listen to a control channel and receive a data channel without being restricted to using some fixed subframes, thereby improving data receiving flexibility. In this mechanism, in a process of listening to a channel, the access network device can dynamically perform resource scheduling on the terminal device, so that the terminal device can listen to a control channel and receive a data channel without being restricted to using some fixed subframes, thereby improving data receiving flexibility. This solution may be further combined with a mechanism for receiving data in a fixed subframe. The access network device may dynamically schedule the terminal device in real time based on a current resource allocation status, and may also schedule, when determining that some subframes are idle, these idle subframes to the terminal device for use on the basis of sending signaling or data in the fixed subframe, to reduce waiting duration of the terminal device, improve resource utilization and resource scheduling flexibility, and further improve a resource scheduling mechanism.

In some possible designs, the first start symbol is a first candidate symbol or a second candidate symbol, the first candidate symbol is earlier in time domain than a first start control symbol on which the first control information is received, and the second candidate symbol is later than the first start control symbol in time domain, or is aligned with the first start control symbol in time domain.

Optionally, the first candidate symbol is in the first time unit; and
the first start symbol is later than a first symbol in the first time unit.

In some possible designs, the first control information is further used to indicate first transmission duration for which the first data channel is received, or indicate an end symbol on which the first data channel is received, and the end symbol is a symbol in the first time unit, to schedule a single time unit; or the end symbol may be a symbol in at least one time unit after the first time unit, to schedule a plurality of time units.

In some possible designs, the access network device may further independently schedule each time unit. Specifically, the access network device sends second control information to the terminal device on the first carrier in a second time unit, where the second control information is used to instruct the terminal device to receive, in the second time unit, a second data channel on the first carrier starting from a second start symbol.

It can be learned from the foregoing description that a start symbol in each time unit is independently configured, so that independent scheduling can be implemented, and dynamic scheduling and receiving are performed based on a current resource allocation status, to effectively improve resource utilization and resource scheduling flexibility.

In some possible designs, the second time unit meets one of the following items:
the second time unit is later than the first time unit, and belongs to a same time scheduling unit as the first time unit, where the time scheduling unit is a basic scheduling time unit in an LTE system; or
the second time unit is later than the first time unit, and belongs to a different time scheduling unit from the first time unit.

In some possible designs, because in a same time domain scheduling unit in the LTE system, only a first time unit has a control area, and a subsequent time unit has no control area, when a PDCCH in the LTE system is bypassed, the NR system receives a control channel and a data channel in each time unit starting from a fixed symbol. Considering resource multiplexing, a scheduling mechanism in which the access network device dynamically indicates a start control symbol on which the control channel is received and a start symbol on which the data channel is received may be further combined, and information that the control channel starts to be received may be independently configured in a time unit after the first time unit in the NR system. The access network device may separately configure, for the terminal device, the first start control symbol on which the first control information is received, and configure, for the terminal device, a second start control symbol on which the second control information is received. It can be learned that the first start control symbol and the second start control symbol are independently configured by the access network device. The second start control symbol on which the access network device sends the second control information may be a first symbol in the second time unit.

In some possible designs, similar to the first time unit, the access network device may configure the following rule: The second start symbol is later than the second start control symbol in time domain, or is aligned with the second start control symbol in time domain.

In some possible designs, because the access network device independently configures different time units, when a quantity of symbols indicated by a PCFICH in the LTE system dynamically changes, or when an active state of a cell in the LTE system deployed on the first carrier changes, a configuration of a current time unit or a configuration of a subsequent time unit may dynamically change. After the configuration dynamically changes, start symbols on which the terminal device receives the first data channel in the different time units are different. In other words, a time domain location of the first start symbol in the first time unit is different from a time domain location of the second start symbol in the second time unit. In this independently configured scheduling manner, resource utilization can be improved, and scheduling flexibility can also be improved.

In some possible designs, in a scenario in which the TE system and the NR system are jointly deployed on the first carrier, an active state of a cell in the LTE system may change. Because a change of the active state of the cell in the LTE system may affect data receiving of the terminal device in the NR system, for the first carrier, the cell in the LTE system may be in an enabled state or a disabled state, and the terminal device in the NR system may always be in an active state. There are mainly a scenario 1 and a scenario 2 for impact of the state of the cell in LTE on data receiving of the terminal device in the NR system. For descriptions of the scenario 1 and the scenario 2, refer to the description in the first aspect in the foregoing part. Details are not described herein again.

In the scenario 1 and the scenario 2, resource allocation on the first carrier changes, to ensure higher resource utilization. The access network device may notify the terminal device of a change of an active state of the first carrier by using media access control MAC signaling or physical layer signaling; and then the access network device may further send third control information to the terminal device on the first carrier in the first time unit, where the third control information is used to instruct the terminal device to receive, in the first time unit, a third data channel on the first carrier starting from a third start symbol.

To reduce unsmooth switching caused because the terminal device excessively fast changes, when an active state of the terminal device switches, the start control symbol on which the control channel is received and the start symbol on which the data channel is received, both the access network device and the terminal device may set the rule 1 and the rule 2 described in the first aspect.

In some possible designs, before the access network device sends the first control information to the terminal device on the first carrier, the access network device sends, to the terminal device, a resource configuration used by the terminal device to receive the first control information, where the resource configuration includes at least one of the first start control symbol on which the terminal device receives the first control information, a subcarrier spacing, and information about rate matching of a reference signal.

Before the access network device sends the third control information to the terminal device on the first carrier, the access network device sends, to the terminal device, another resource configuration used by the terminal device to receive the third control information, where the another resource configuration includes at least one of a start control symbol on which the terminal device receives the third control information, a subcarrier spacing, and information about rate matching of a reference signal.

It can be learned from the rule 1 described in the first aspect that the resource configuration keeps unchanged when a status of the first carrier switches between the first active state and the second active state.

The another resource configuration is a first candidate resource configuration or a second candidate resource configuration, the first candidate resource configuration corresponds to the first active state, and the second candidate resource configuration corresponds to the second active state. It can be learned that when switching from the first active state to the second active state, the terminal device may maintain, in the rule 1, that a manner of receiving a part of control channels in the first time unit does not change with a change of the active state, so that smooth switching can be implemented during the change of the active state.

In some possible designs, the first control information includes first resource allocation information of the first data channel, the second control information includes second resource allocation information of the second data channel, and the third control information includes third resource allocation information of the third data channel.

An indication of the first resource allocation information is based on a first frequency domain range of the first carrier, an indication of the second resource allocation information is based on a second frequency domain range of the first carrier, and an indication of the third resource allocation information is based on a third frequency domain range of the first carrier.

Optionally, the first frequency domain range is different from the second frequency domain range, and/or the first frequency domain range is different from the third frequency domain range.

It can be learned from the rule 2 described in the first aspect that the first frequency domain range keeps unchanged when the status of the first carrier switches between the first active state and the second active state; and the second frequency domain range is a first candidate frequency domain range or a second candidate frequency domain range, the first candidate frequency domain range corresponds to the first active state, and the second candidate frequency domain range corresponds to the second active state. It can be learned that when switching from the first active state to the second active state, the terminal device may maintain, in the rule 2, that a manner of resource allocation on a part of control channels in the first time unit does not change with a change of the active state, so that smooth switching can be implemented during the change of the active state.

A third aspect of this application provides a terminal device, which has a function of implementing the data receiving method corresponding to the first aspect. The function may be implemented by hardware, or may be implemented by hardware by executing corresponding software. The hardware or the software includes one or more modules corresponding to the function, and the module may be software and/or hardware.

In a possible design, the terminal device belongs to a new radio NR system, and the terminal device includes a processing module and a transceiver module. The processing module is configured to control a receiving/transmitting operation of the transceiver module.

The receiving module is configured to: receive, on a first carrier in a first time unit, first control information sent by an access network device, where the first control information is used to indicate a first start symbol on which a first data channel is received; and
receive, in the first time unit or a time unit after the first time unit, the first data channel on the first carrier starting from the first start symbol.

In some possible designs, the first start symbol is a first candidate symbol or a second candidate symbol, the first candidate symbol is earlier in time domain than a first start control symbol on which the first control information is received, and the second candidate symbol is later than the first start control symbol in time domain, or is aligned with the first start control symbol in time domain.

Before receiving the first control information on the first carrier, the transceiver module is further configured to:
obtain frequency domain configuration information of a control channel corresponding to the first control information, where the frequency domain configuration information includes information indicating a control frequency domain area of the control channel corresponding to the first control information.

The first candidate symbol is in the first time unit; and
the first start symbol is later than a first symbol in the first time unit.

In some possible designs, the first control information is further used to indicate first transmission duration for which the first data channel is received, or indicate an end symbol on which the first data channel is received, and the end symbol is a symbol in the first time unit or a symbol in at least one time unit after the first time unit.

In some possible designs, the transceiver module is further configured to:
receive, on the first carrier in a second time unit, second control information sent by the access network, where the second control information is used to indicate a second start symbol on which a second data channel is received; and
receive, in the second time unit, the second data channel on the first carrier starting from the second start symbol.

In some possible designs, the second time unit meets one of the following items:
the second time unit is later than the first time unit, and belongs to a same time scheduling unit as the first time unit, where the time scheduling unit is a basic scheduling time unit in an LTE system; or
the second time unit is later than the first time unit, and belongs to a different time scheduling unit from the first time unit.

In some possible designs, both a second start control symbol on which the second control information is received and the first start control symbol on which the first control information is received are independently configured by the access network device.

In some possible designs, the second start symbol is later than the second start control symbol in time domain, or is aligned with the second start control symbol in time domain.

In some possible designs, a time domain location of the first start symbol in the first time unit is different from a time domain location of the second start symbol in the second time unit.

In some possible designs, the transceiver module is further configured to:
receive, on the first carrier in the first time unit, third control information sent by the access network device, where the third control information is used to indicate a third start symbol on which a third data channel is received; and receive the third data channel on the first carrier starting from the third start symbol.

In some possible designs, the first control information is received based on a resource configuration, and the third control information is received based on another resource configuration.

The resource configuration includes at least one of the first start control symbol on which the first control information is received, a subcarrier spacing, and information about rate matching of a reference signal; and the another resource configuration includes at least one of a start control symbol on which the third control information is received, a subcarrier spacing, and information about rate matching of a reference signal.

In some possible designs, the resource configuration keeps unchanged when a status of the first carrier switches between a first active state and a second active state.

The another resource configuration is a first candidate resource configuration or a second candidate resource configuration, the first candidate resource configuration corresponds to the first active state, and the second candidate resource configuration corresponds to the second active state.

In some possible designs, the first active state or the second active state is sent to the terminal device by using media access control MAC signaling or physical layer signaling.

In some possible designs, the first control information includes first resource allocation information of the first data channel, the second control information includes second resource allocation information of the second data channel, and the third control information includes third resource allocation information of the third data channel.

An indication of the first resource allocation information is based on a first frequency domain range of the first carrier, an indication of the second resource allocation information is based on a second frequency domain range of the first carrier, and an indication of the third resource allocation information is based on a third frequency domain range of the first carrier.

Optionally, the first frequency domain range is different from the second frequency domain range, and/or the first frequency domain range is different from the third frequency domain range.

In some possible designs, the first frequency domain range keeps unchanged when the status of the first carrier switches between the first active state and the second active state; and the second frequency domain range is a first candidate frequency domain range or a second candidate frequency domain range, the first candidate frequency domain range corresponds to the first active state, and the second candidate frequency domain range corresponds to the second active state.

In some possible designs, when scheduling is performed in the NR system based on a mini-slot, the transceiver module is specifically configured to:
monitor, on nonconsecutive symbols in time domain, a control channel corresponding to the first control information, for example, may monitor, at equal time domain intervals, the control channel corresponding to the first control information.

In a possible design, the terminal device includes:
at least one processor, a transceiver, and a memory.

The memory is configured to store program code, and the processor is configured to invoke the program code in the memory to perform the technical solution in the first aspect.

A fourth aspect of this application provides an access network device, which has a function of implementing the data sending method corresponding to the second aspect. The function may be implemented by hardware, or may be implemented by hardware by executing corresponding software. The hardware or the software includes one or more modules corresponding to the function, and the module may be software and/or hardware.

In a possible design, the access network device belongs to a new radio NR system, and the access network device may be configured to schedule a terminal device in the NR system. The access network device includes a processing module and a transceiver module. The processing module is configured to control a receiving/transmitting operation of the transceiver module.

The processing module is configured to generate first control information.

The transceiver module is configured to: send, to the terminal device on a first carrier in a first time unit, the first control information generated by the processing module, where the first control information is used to instruct the terminal device to receive, in the first time unit or a time unit after the first time unit, the first data channel on the first carrier starting from a first start symbol; and
send, in the first time unit, the first data channel on the first carrier starting from the first start symbol.

In some possible designs, the first start symbol is a first candidate symbol or a second candidate symbol, the first candidate symbol is earlier in time domain than a first start control symbol on which the first control information is received, and the second candidate symbol is later than the first start control symbol in time domain, or is aligned with the first start control symbol in time domain.

In some possible designs, the first candidate symbol is in the first time unit; and
the first start symbol is later than a first symbol in the first time unit.

In some possible designs, the first control information is further used to indicate first transmission duration for which the first data channel is received, or indicate an end symbol on which the first data channel is received, and the end symbol is a symbol in the first time unit or a symbol in at least one time unit after the first time unit.

In some possible designs, the transceiver module is further configured to:
send second control information to the terminal device on the first carrier in a second time unit, where the second control information is used to instruct the terminal device to receive, in the second time unit, a second data channel on the first carrier starting from a second start symbol.

In some possible designs, the second time unit meets one of the following items:
the second time unit is later than the first time unit, and belongs to a same time scheduling unit as the first time unit, where the time scheduling unit is a basic scheduling time unit in an LTE system; or
the second time unit is later than the first time unit, and belongs to a different time scheduling unit from the first time unit.

In some possible designs, both a second start control symbol on which the second control information is sent and the first start control symbol on which the first control information is received are independently configured by the access network device.

In some possible designs, the second start symbol is later than the second start control symbol in time domain, or is aligned with the second start control symbol in time domain.

In some possible designs, a time domain location of the first start symbol in the first time unit is different from a time domain location of the second start symbol in the second time unit.

In some possible designs, the transceiver module is further configured to:
send third control information to the terminal device on the first carrier in the first time unit, where the third control information is used to instruct the terminal device to receive, in the first time unit, a third data channel on the first carrier starting from a third start symbol.

In some possible designs, before the access network device sends the first control information to the terminal device on the first carrier, the transceiver module is further configured to:
send, to the terminal device, a resource configuration used by the terminal device to receive the first control information, where the resource configuration includes at least one of the first start control symbol on which the terminal device receives the first control information, a subcarrier spacing, and information about rate matching of a reference signal.

In some possible designs, before the access network device sends the third control information to the terminal device on the first carrier, the transceiver module is further configured to:
send, to the terminal device, another resource configuration used by the terminal device to receive the third control information, where the another resource configuration includes at least one of a start control symbol on which the terminal device receives the third control information, a subcarrier spacing, and information about rate matching of a reference signal.

In some possible designs, the transceiver module is further configured to:
notify the terminal device of a first active state or a second active state in the first time unit by using media access control MAC signaling or physical layer signaling, where
the resource configuration keeps unchanged when a status of the first carrier switches between the first active state and the second active state; and
the another resource configuration is a first candidate resource configuration or a second candidate resource configuration, the first candidate resource configuration corresponds to the first active state, and the second candidate resource configuration corresponds to the second active state.

In some possible designs, the first control information includes first resource allocation information of the first data channel, the second control information includes second resource allocation information of the second data channel, and the third control information includes third resource allocation information of the third data channel.

An indication of the first resource allocation information is based on a first frequency domain range of the first carrier, an indication of the second resource allocation information is based on a second frequency domain range of the first carrier, and an indication of the third resource allocation information is based on a third frequency domain range of the first carrier.

In some possible designs, the first frequency domain range is different from the second frequency domain range, and/or the first frequency domain range is different from the third frequency domain range.

In some possible designs, the first frequency domain range keeps unchanged when the status of the first carrier switches between the first active state and the second active state; and the second frequency domain range is a first candidate frequency domain range or a second candidate frequency domain range, the first candidate frequency domain range corresponds to the first active state, and the second candidate frequency domain range corresponds to the second active state.

In a possible design, the access network device includes:
at least one processor, a transceiver, and a memory.

The memory is configured to store program code, and the processor is configured to invoke the program code in the memory to perform the technical solution in the second aspect.

Another aspect of this application provides a computer readable storage medium, including an instruction. When running on a computer, the computer readable storage medium enables the computer to perform the methods in the foregoing aspects.

Another aspect of this application provides a computer storage medium, including an instruction. When running on a computer, the computer storage medium enables the computer to perform the operations performed by the terminal device in the foregoing aspects or perform the operations performed by the access network device in the foregoing aspects.

Another aspect of this application provides a computer program product. When running on a computer, the computer program product enables the computer to perform the operations performed by the terminal device in the foregoing aspects or perform the operations performed by the access network device in the foregoing aspects.

Compared with the prior art, in the solutions provided in this application, the access network device dynamically indicates, to the terminal device in each time unit, the first start symbol on which the first data channel is received, so that the terminal device can listen to a control channel and receive a data channel without being restricted to using some fixed subframes, thereby improving data receiving flexibility.

### BRIEF DESCRIPTION OF DRAWINGS

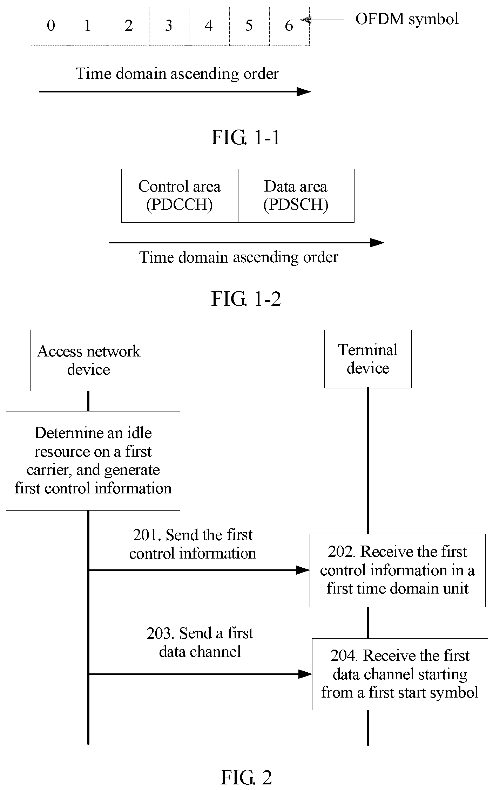

FIG. 1-1 is a schematic structural diagram of a slot according to an embodiment of this application;
FIG. 1-2 is a schematic structural diagram of a time unit according to an embodiment of this application;
FIG. 2 is a schematic flowchart of a data receiving/transmitting method according to a claimed embodiment;
FIG. 3 is a schematic structural diagram of each time unit when an NR system and an LTE system coexist on a first carrier according to an embodiment of this application;
FIG. 4-1 is another schematic structural diagram of each time unit when an NR system and an LTE system coexist on a first carrier according to an embodiment of this application;
FIG. 4-2 is still another schematic structural diagram of each time unit when an NR system and an LTE system coexist on a first carrier according to an embodiment of this application;
FIG. 5 is a schematic structural diagram of a terminal device according to an embodiment of this application;
FIG. 6 is a schematic structural diagram of an access network device according to an embodiment of this application; and
FIG. 7 is a schematic structural diagram of a physical apparatus that performs a data receiving/transmitting method according to an embodiment of this application.

### DESCRIPTION OF EMBODIMENTS

The invention is defined by the appended independent claims and further embodiments are described by the dependent claims. In the specification, claims, and accompanying drawings of the embodiment of this application, the terms "first", "second", and so on are intended to distinguish between similar objects but do not necessarily indicate a specific order or sequence. It should be understood that the data termed in such a way is interchangeable in proper circumstances so that the embodiments described herein can be implemented in other orders than the order illustrated or described herein. In addition, the terms "include", "have", or any other variant thereof are intended to cover a non-exclusive inclusion. For example, a process, a method, a system, a product, or a device that includes a series of steps or modules is not necessarily limited to the steps or modules that are expressly listed, but may include another step or module not expressly listed or inherent to the process, the method, the product, or the device. The module division in this specification is merely logical division, and there may be another division during implementation in actual application. For example, a plurality of modules may be combined or integrated into another system, or some features may be ignored or not performed. In addition, the displayed or discussed mutual couplings or direct couplings or communication connections may be implemented through some interfaces. The indirect couplings or communication connections between the modules may be implemented in electronic or another form, and this is not limited in this specification. In addition, modules or sub-modules described as separate components may be or may not be physically separated, or may be or may not be physical modules, or may not be grouped into a plurality of circuit modules. Objectives of the solutions of the embodiments of this application may be achieved by selecting some or all of the modules based on actual requirements.

This application provides a data receiving/transmitting method, a device, a storage medium, and a program product, which may be applied to an NR system, or may be applied to a scenario in which an NR system and an LTE system are jointly deployed on a same carrier.

A time domain scheduling unit in this application is used to represent a unit of scheduling a time domain resource. One time domain scheduling unit includes at least two time units (for example, a first time unit and a second time unit in this application), each time unit includes at least two symbols in time domain, and indexes of the symbols are arranged in time domain ascending order. The time unit may be another time unit such as a subframe, a slot, a mini-slot, or a short time interval (English full name: Transmission Time Interval, TTI for short). FIG. 1-1 is a schematic structural diagram of a slot. Each box in FIG. 1-1 represents an orthogonal frequency division multiplexing (English full name: Orthogonal Frequency Division Multiplexing, OFDM for short) symbol in time domain, 0 identifies a symbol index of the OFDM symbol, and a symbol whose index is 0 may be briefly referred to as #0. Other symbols are similar.

As shown in FIG. 1-2, a time domain scheduling unit may include a control area and a data area in time domain. The control area may be used to carry configuration information on a physical downlink control channel (English full name: Physical Downlink Control Channel, PDCCH for short), and the first n OFDM symbols in a time unit are occupied by the control area, where n is a positive integer. Control information may be transmitted on the PDCCH, and the control information may be used to schedule scheduling information of a transport block on a data channel.

The data channel includes a physical downlink shared channel (English full name: Physical Downlink Shared Channel, PDSCH for short) and a physical uplink shared channel (English full name: Physical Uplink Shared Channel, PDSCH for short). The scheduling information may include information such as a related format used to indicate the PDSCH and the PUSCH, resource allocation information, hybrid automatic retransmission information (English full name: Hybrid Automatic Repeat Request, HARQ for short), the first n OFDM symbols of the PDSCH and the PUSCH in a time unit, and a modulation and coding scheme.

The data area may be used to carry the PDSCH or the PUSCH. The terminal device may monitor a control channel in a corresponding time unit, and then receive/transmit data on the data channel based on the control information.

Each time unit includes a symbol in time domain, and specifically, division of a quantity of symbols included in each time unit is not limited in the present invention. A largest quantity of symbols included in the control area and the data area is related to a division structure of the time unit in time domain. Specifically, division of a time unit in time domain and division of the control area and the data area in the time unit in time domain are not limited in this application.

To resolve the foregoing technical problem, this application provides the following technical solutions:
An access network device dynamically indicates, to a terminal device in each time unit, a first start symbol on which a first data channel is received, so that the terminal device can listen to a control channel and receive a data channel without being restricted to using some fixed subframes, thereby improving data receiving flexibility.

When an LTE system and an NR system coexist on a first carrier, the access network device may further dynamically indicate, based on a control area in the LTE system, a start symbol on which the terminal device in the NR system receives a control channel and a data channel, so that when the two systems coexist on the first carrier, terminal devices in the two systems do not conflict with each other in resource allocation, and performance of the respective systems is not affected. Alternatively, the access network device may dynamically indicate, to the terminal device based on a dynamic change of a quantity of symbols in a control area in the LTE system, a change of an active state of the first carrier, or the like, a start symbol on which a control channel and a data channel are received.

It can be learned from the foregoing description that in the foregoing technical solutions, the start symbol on which the control channel and the data channel are received can be flexibly indicated to the terminal device, and resource utilization and resource multiplexing rate can also be improved.

It should be noted that the access network device in this application is a device that connects the terminal device to a wireless network, is also referred to as a base station, and includes but is not limited to an evolved NodeB (English full name: evolved Node Base, eNB for short), a radio network controller (English full name: Radio Network Controller, RNC for short), a NodeB (English full name: Node B, NB for short), a base station controller (English full name: Base Station Controller, BSC for short), a base transceiver station (English full name: Base Transceiver Station, BTS for short), a home eNodeB (Home evolved NodeB or Home NodeB, HNB for short), or a baseband unit (English full name: Baseband Unit, BBU for short).

The terminal device mentioned in this application may be a device that provides a user with voice and/or data connectivity, a handheld device with a wireless connection function, or another processing device connected to a wireless modem. A terminal device may communicate with one or more core networks through a radio access network (English full name: Radio Access Network, RAN for short). The terminal device may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges language and/or data with the radio access network. For example, the terminal device may be a device such as a personal communication service (English full name: Personal Communication Service, PCS for short) phone, a cordless telephone set, a Session Initiation Protocol (SIP) phone, a wireless local loop (Wireless Local Loop, WLL for short) station, or a personal digital assistant (English full name: Personal Digital Assistant, PDA for short). The wireless terminal may be referred to as a system, a subscriber unit (Subscriber Unit), a subscriber station (Subscriber Station), a mobile station (Mobile Station), a mobile console (Mobile), a remote station (Remote Station), an access point (Access Point), a remote terminal (Remote Terminal), an access terminal (Access Terminal), a user terminal (User Terminal), a terminal device, a user agent (User Agent), a user device (User Device), or user equipment (User Equipment).

The following describes a data receiving/transmitting method (including a data sending method and a data receiving method) in the embodiments of this application by using an example. The method may be applied to a terminal device in a new radio NR system, or may be applied to a terminal device in an NR system deployed on a same first carrier as an LTE system. Scheduling and receiving may be performed in the NR system based on a time domain scheduling unit. One time unit is used as an example for description in the embodiments of this application. For another time unit, refer to a scheduling manner configured in the embodiments of this application. For example, a start symbol is configured for a control area or a data area in a first subframe, and a configuration of a start symbol on which a control area and a data area are received in other subframes may be totally the same as that of the first subframe, to schedule a plurality of subframes. Certainly, alternatively, a start symbol in each of a control area and a data area may be independently configured in other subframes, to independently and dynamically schedule the subframes. Referring to FIG. 2, a claimed embodiment of this application includes the following steps.

201. An access network device sends first control information to a terminal device in a first time unit.

The access network device may first determine an idle resource on a first carrier, generate corresponding first control information, and then add the corresponding first control information to a first control channel and send the corresponding first control information to the terminal device. The first control information may be used to indicate a first start symbol on which a first data channel is received. The first control information is carried on a new radio-physical downlink control channel (English full name: New Radio-Physical Downlink Control Channel, NR-PDCCH for short). Receiving a control channel and receiving control information are not distinguished in this application.

According to the claimed embodiment, the access network device schedules a terminal device in a new radio, NR, system. The first time unit may be a basic time domain scheduling unit such as a subframe, a slot, or a short TTI, or may be a mini-slot in an NR system or a short TTI in an LTE system. For example, the first time unit has a length of two or three orthogonal frequency division multiplexing OFDM symbols. The slot is used as an example in this embodiment of this application. For example, one slot includes seven OFDM symbols, and different subcarrier spacings may be configured for the terminal device in the NR system. For example, a slot in a subcarrier spacing of 15 kilohertz (English full name: Kilohertz, KHz for short) is 0.5 millisecond (English full name: millisecond, ms for short), and a slot in a subcarrier spacing of 30 KHz is 0.25 ms. UE in LTE can only assume the subcarrier spacing of 15 KHz.

The first carrier is a cell or carrier serving the terminal device. The carrier and the cell may not be distinguished in this application, and an example in which the first carrier is the carrier serving the terminal device may be used in this application. Both the NR system and the LTE system may be deployed on the first carrier. A bandwidth of the first carrier may be a carrier bandwidth supported by the LTE system, for example, 1.4 megahertz (English full name: Megahertz, MHz for short), 3 MHz, 5 MHz, 10 MHz, 15 MHz, or 20 MHz; or may be an NR carrier greater than 20 MHz, for example, 40 MHz or even 80 MHz. For example, of 80 MHz, one frequency part of 20 MHz or two frequency parts of 20 MHz may each be an LTE bandwidth for supporting a terminal device in the LTE system.

The first start symbol refers to a start moment at which the terminal device receives the first data channel in time domain. For example, the access network device may instruct the terminal device to listen to a control channel or to receive a data channel starting from a symbol 3 in a subframe. In this case, the terminal device listens to the control channel or receives the data channel on the corresponding symbol.

202. The terminal device receives, on a first carrier in the first time unit, the first control information sent by the access network device.

203. The access network device sends, in the first time unit or a time unit after the first time unit, the first data channel on the first carrier starting from the first start symbol.

204. The terminal device receives, in the first time unit or the time unit after the first time unit, the first data channel on the first carrier starting from the first start symbol.

The first data channel refers to data carried on the first data channel, for example, downlink data delivered by a base station, and receiving a data channel and receiving data are not distinguished in this application.

Optionally, in some embodiments of this application, the first control information sent in step 201 is further used to indicate first transmission duration for which the first data channel is received, or indicate an end symbol on which the first data channel is received, and the end symbol is a symbol in the first time unit, to schedule a single slot, or the end symbol is a symbol in at least one time unit after the first time unit, to schedule a plurality of slots. The terminal device may receive control information and a data channel in a time unit other than the first time unit with reference to a scheduling manner of the first time unit, to dynamically schedule a plurality of time units.

Compared with an existing mechanism, in this embodiment of this application, the access network device generates the first control information based on a current resource allocation status, and then delivers the first control information to the terminal device in the first time unit. Then, the terminal device may receive, in the first time unit, the first control information dynamically delivered by the access network device, and then receive the first data channel based on the first start symbol indicated by the first control information. In this mechanism, in a process of listening to a channel, the access network device can dynamically perform resource scheduling on the terminal device, so that the terminal device can listen to a control channel and receive a data channel without being restricted to using some fixed subframes, thereby improving data receiving flexibility. This solution may be further combined with a mechanism for receiving data in a fixed subframe. The access network device may dynamically schedule the terminal device in real time based on a current resource allocation status, and may also schedule, when determining that some subframes are idle, these idle subframes to the terminal device for use on the basis of sending signaling or data in the fixed subframe, to reduce waiting duration of the terminal device, improve resource utilization and resource scheduling flexibility, and further improve a resource scheduling mechanism.

It can be learned from the foregoing technical solution that in this scheduling mechanism for dynamically indicating the first start symbol, a resource released by another terminal device in the NR system can be allocated and indicated to the foregoing terminal device, to improve resource utilization; or an idle resource in the LTE system in which the first carrier is multiplexed can be allocated and indicated to the foregoing terminal device, to improve a resource multiplexing rate.

Optionally, in some embodiments of this application, a selection rule of the first start symbol may be further pre-configured, so that the terminal device can properly listen to signaling and receive data. The following two rules may be mainly configured based on an application scenario:
(1) The first start symbol is a first candidate symbol, and the first candidate symbol may be earlier in time domain than a first start control symbol on which the first control information is received.
   Optionally, the first candidate symbol may be in the first time unit, and the first start symbol may be later than a first symbol in the first time unit. The terminal device may receive the first control information and the first data channel in the first time unit, and obtain correct first control information and data through demodulation after caching the first control information and the data carried on the first data channel, to complete proper receiving. In this configuration, a relatively small quantity of symbols is mainly dynamically configured for a control area in LTE, for example, a value notified by a PCFICH is 1. In this case, when a first start control symbol configured for the first control channel in NR in the first time domain unit is a symbol 3, the first data channel in NR is instructed to be received starting from a symbol 1 in this case, so that a time domain symbol that is not used by the control area in LTE can be fully used to improve system resource utilization.
(2) The first start symbol is a second candidate symbol, and the second candidate symbol may be aligned with the first start control symbol in time domain, or the second candidate symbol may be later than the first start control symbol in time domain. In this configuration, a relatively large quantity of symbols is mainly dynamically configured for a control area in LTE, for example, a value notified by a PCFICH is 3. In this case, when a first start control symbol configured for the first control channel in NR in the first time domain unit is a symbol 3, the first data channel in NR is instructed to be received starting from a symbol 3 or a symbol 4 in this case. In this case, the control area in LTE can be bypassed to avoid causing interference to a control channel in LTE.

Optionally, in some embodiments of this application, before the terminal device receives the first control information on the first carrier, the terminal device may further obtain, from the access network device, frequency domain configuration information of a control channel corresponding to the first control information, where the frequency domain configuration information may include information indicating a control frequency domain area of the control channel corresponding to the first control information. Specifically, similar to the control channel in the LTE system, a control frequency domain area of the first control channel in NR may occupy a full bandwidth, or may be configured to occupy a part of bandwidths on the first carrier. Compared with LTE, in this configuration, a frequency domain resource location of the control channel in NR can be flexibly configured, sending frequency of a full-bandwidth signal is avoided as far as possible, and the NR system and the LTE system or a future-evolved NR system can be less affected.

Optionally, in some embodiments of this application, in this application, a plurality of time units may be centrally scheduled, or different time units may be independently scheduled, to adapt to current resource allocation and improve resource allocation flexibility or adapt to a change of a status of the first carrier. Specifically, the terminal device may further receive, on the first carrier in a second time unit after the first time unit is scheduled, second control information sent by the access network. Similarly, the second control information is used to indicate a second start symbol on which a second data channel is received. It should be noted that the first time unit and the second time unit in this application may be any time unit, and the first time unit and the second time unit may be in a same time domain scheduling unit, or may be in different time domain scheduling units. Optionally, the first time unit may be a 1^{st} time unit, and the second time unit may be any time unit after the 1^{st} time unit, for example, a 2^{nd} time unit.

The terminal device receives, in the second time unit, the second data channel on the first carrier starting from the second start symbol.

A start symbol in each time unit is independently configured, so that independent scheduling can be implemented, and dynamic scheduling and receiving are performed based on a current resource allocation status, to effectively improve resource utilization and resource scheduling flexibility.

Optionally, in some embodiments of this application, the second time unit meets one of the following items:
The second time unit is later than the first time unit, and belongs to a same time domain scheduling unit as the first time unit, where the time domain scheduling unit is a basic scheduling time unit in an LTE system.

When the first time unit is a 1^{st} time unit, and the first time unit and the second time unit belong to the same time domain scheduling unit, because the LTE system has a control area only in the 1^{st} time unit, the access network device may indicate, to the terminal device again, a new start symbol on which a data channel and a control channel are received in the second time unit, so that a resource that is not occupied by the LTE system in the second time unit can be effectively used.

Alternatively, the second time unit is later than the first time unit, and belongs to a different time domain scheduling unit from the first time unit. When the first time unit is a 1^{st} time unit or not a 1^{st} time unit, and the first time unit and the second time unit belong to different time domain scheduling units, if a PCFICH in the LTE system dynamically indicates that a quantity of symbols occupied by a control area in the LTE system in the second time unit changes, the access network device may dynamically adjust, based on the changed quantity, a start symbol on which a control channel and a data channel are received in the NR system.

If the PCFICH indicates that there are two symbols in the first time unit, the access network device may indicate that the start symbol on which the control channel and the data channel are received in the NR system is a third symbol in the first time unit. If the PCFICH indicates that there are three symbols in the second time unit, the access network device may indicate that the start symbol on which the control channel and the data channel are received in the NR system is a fourth symbol in the first time unit.

If the PCFICH indicates that there are three symbols in the first time unit, the access network device may indicate that the start symbol on which the control channel and the data channel are received in the NR system is a fourth symbol in the first time unit. If the PCFICH indicates that there is one symbol in the second time unit, the access network device may indicate that the start symbol on which the control channel and the data channel are received in the NR system is a second symbol in the first time unit.

It should be noted that a quantity of second time units in this application is not limited to one. For a dynamic indication of another time unit, refer to the description of the second time unit in this application.

Optionally, in some embodiments of this application, for example, in a scenario in which the first carrier is shared by the LTE system and NR, when a cell in the LTE system is enabled, the first n symbols in the first time unit are occupied and are used as a control area, and the control area is used to carry an LTE-PDCCH. When the NR system is configured, a signal or a channel in the LTE system needs to be bypassed, so that the LTE system and the NR system coexist on the first carrier. In addition, because in a same time domain scheduling unit in the LTE system, only a first time unit has a control area, and a subsequent time unit has no control area, when a PDCCH in the LTE system is bypassed, a control channel and a data channel are received in the NR system in each time unit starting from a fixed symbol. Considering resource multiplexing, a scheduling mechanism in which the access network device dynamically indicates a start control symbol on which the control channel is received and a start symbol on which the data channel is received may be further combined, and is mainly described below in the following two aspects:
In one aspect, if the first three symbols occupied by a control area in a first slot are configured in the LTE system, the NR system may be configured to receive the control channel starting from a fourth symbol. However, in a second slot, because the LTE system has no control area, if the NR system is still configured to receive the control channel starting from the fourth symbol, the first three symbols in the second slot are not used, thereby causing a resource waste.

Therefore, considering resource utilization, information that the control channel starts to be received may be independently configured for a time unit after the first time unit in the NR system. The access network device may separately configure, for the terminal device, the first start control symbol on which the first control information is received, and configure, for the terminal device, a second start control symbol on which the second control information is received. It can be learned that the first start control symbol and the second start control symbol are independently configured by the access network device. For example, the second start control symbol on which the second control information is received may be configured as a first symbol in the second time unit. In this way, in the first time unit, the terminal device in the NR system can use an idle resource that is not used in the LTE system, to improve a resource multiplexing rate.

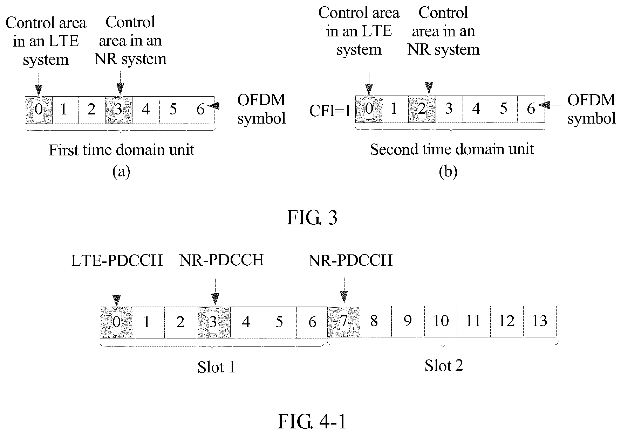

In another aspect, as shown in FIG. 3 (a), in some time domain scheduling units in the LTE system, in the first time unit, when the PCFICH indicates that three symbols are occupied by the control area in the LTE system, the access network device instructs the terminal device to receive, in the first time unit, a control channel starting from a fourth symbol (#3). However, in the second time unit, when the PCFICH dynamically indicates that one symbol is occupied by the control area in the LTE system (CFI=1), if an NR-PDCCH and an NR-PDSCH are still received based on the previous configurations of the time domain scheduling units starting from #3, two symbols (including #1 and #2) are wasted.

In this case, the access network device may dynamically indicate, to the terminal device, a new second start symbol or a new start control symbol on which the control channel is received. For example, the access network device may dynamically configure the second start control symbol as a symbol other than the first symbol in the second time unit, so that the terminal device can dynamically change the start control symbol on which the control information is received or the start symbol on which the data channel is received. For example, as shown in FIG. 3 (b), the start control symbol on which the control channel is received is configured as #2, or certainly may be configured as #1, to use #2 that is not used in the LTE system, thereby improving resource utilization. Configuration information of each time unit is independently configured and a dynamic indication of the PCFICH is combined, so that when the LTE system and the NR system coexist on the first carrier, the access network device can dynamically adjust, based on a quantity of symbols dynamically indicated by the PCFICH in the LTE system, the start control symbol on which the control channel is received in the NR system, to break through a limitation that the terminal device can receive the control channel only on a fixed symbol, and also improve resource utilization to some extent.

When the NR-PDCCH indicates the first start symbol, a start symbol on the NR-PDSCH may be specifically implicitly corresponded to by using a display bit or a display state on the NR-PDCCH or a parameter such as a resource location occupied by the NR-PDCCH.

Optionally, in some embodiments of this application, similar to the first time unit, the following rule may also be configured: The second start symbol is later than the second start control symbol in time domain, or is aligned with the second start control symbol in time domain. For a time unit in each time domain scheduling unit, the rule is also applicable, and is not described again.

Optionally, in some embodiments of this application, different time units are independently configured, so that a time domain location of the first start symbol in the first time unit can be the same as or different from a time domain location of the second start symbol in the second time unit. When the quantity of symbols indicated by the PCFICH in the LTE system dynamically changes, or when an active state of the cell in the LTE system deployed on the first carrier changes, a configuration of a current time unit or a configuration of a subsequent time unit may dynamically change. After the configuration dynamically changes, start symbols on which the terminal device receives the first data channel in the different time units are different.

For example, in a first slot, when the PCFICH in the LTE system indicates that there are three symbols on the LTE-PDCCH, a corresponding start control symbol on which the NR-PDCCH is configured in the NR system is a fourth symbol. In a second slot, when the PCFICH in the LTE system indicates that there are two symbols on the LTE-PDCCH, a corresponding start control symbol on which the NR-PDCCH is configured in the NR system may be a third symbol. It can be learned from the foregoing description that in this independently configured scheduling manner, resource utilization can be improved, and scheduling flexibility can also be improved.

Optionally, in some embodiments of this application, even if a corresponding first start symbol and a corresponding first start control symbol are configured in the first time unit, considering a scenario in which the LTE system and the NR system are jointly deployed on the first carrier, the active state of the cell in the LTE system may change. Because a change of the active state of the cell in the LTE system may affect data receiving of the terminal device in the NR system, for the first carrier, the cell in the LTE system may be in an enabled state or a disabled state, and the terminal device in the NR system may always be in an active state. There are mainly the following two scenarios for impact of the state of the cell in LTE on data receiving of the terminal device in the NR system:
Scenario 1: If the terminal device is in an active state of UE that is in NR and that is in an enabled state of UE in LTE, the terminal device needs to consider bypassing a signal or a channel in the LTE system, and may further consider resource multiplexing with the LTE system. Similarly, the active state described in the scenario 1 may be briefly referred to as a first active state.
Scenario 2: If the cell in LTE is in the disabled state and the terminal device in the NR system is in the active state, the terminal device may use the first carrier more cleanly, for example, there is no need to consider, on the NR-PDCCH, bypassing a control area, a CRS, and the like in LTE. For ease of description, the active state described in the scenario 2 may be briefly referred to as a second active state.

In the scenario 1 and the scenario 2, resource allocation on the first carrier correspondingly changes, to ensure higher resource utilization. When the active state of the terminal device switches, the terminal device also needs to correspondingly change, based on a change of the active state, the start control symbol on which the control channel is received and the start symbol on which the data channel is received. In this case, the terminal device receives, on the first carrier in the first time unit, third control information sent by the access network device, where the third control information is used to indicate a third start symbol on which a third data channel is received; and then the terminal device receives the third data channel on the first carrier starting from the third start symbol.

Optionally, in some embodiments of this application, corresponding to the scenario 1 and the scenario 2, the terminal device may determine the first active state or the second active state by using media access control MAC signaling or physical layer signaling sent by the access network device. Resource configurations used by the terminal device to receive control information are different for different active states. Specifically, in the first time unit, the first control information is received based on a resource configuration, and the resource configuration may include at least one of the first start control symbol on which the first control information is received, a subcarrier spacing, and information about rate matching of a reference signal. The third control information may be received based on another resource configuration, and the another resource configuration may include at least one of a start control symbol on which the third control information is received, a subcarrier spacing, and information about rate matching of a reference signal.

In an effective period of the MAC signaling or the physical layer signaling, to be specific, in a state switching process, the terminal device changes, based on a corresponding resource configuration, the start control symbol on which the control channel is received and the start symbol on which the data channel is received. To maintain smooth switching, the following rules may also be set:
Rule 1: A currently used resource configuration keeps unchanged during switching of the active state.

Specifically, the terminal device may keep the resource configuration unchanged when a status of the first carrier switches between the first active state and the second active state. To be specific, the terminal device still uses, during switching of the active state, the current resource configuration to receive the control channel and the data channel, instead of immediately using, during switching, the another resource configuration to receive the control channel and the data channel.

Optionally, the another resource configuration may alternatively be a first candidate resource configuration or a second candidate resource configuration, the first candidate resource configuration corresponds to the first active state, and the second candidate resource configuration corresponds to the second active state.

When switching from the first active state to the second active state, the terminal device can maintain, by setting the rule 1, that a manner of receiving a part of control channels in the first time unit does not change with a change of the active state, so that smooth switching can be implemented during the change of the active state.

Rule 2: Resource allocation information is indicated based on a frequency domain range of the first carrier to ensure smooth switching.

Specifically, the first control information may further include first resource allocation information of the first data channel, the second control information may include second resource allocation information of the second data channel, and the third control information includes third resource allocation information of the third data channel. An indication of the first resource allocation information is based on a first frequency domain range of the first carrier, an indication of the second resource allocation information is based on a second frequency domain range of the first carrier, and an indication of the third resource allocation information is based on a third frequency domain range of the first carrier.

The first frequency domain range is different from the second frequency domain range, and/or the first frequency domain range is different from the third frequency domain range.

It may be specified that the first frequency domain range keeps unchanged when a status of the first carrier switches between the first active state and the second active state. To be specific, the terminal device continues to use the current first frequency domain range during switching of the active state, instead of immediately using, during switching, a new frequency domain range to receive the control channel and the data channel. The second frequency domain range is a first candidate frequency domain range or a second candidate frequency domain range, the first candidate frequency domain range corresponds to the first active state, and the second candidate frequency domain range corresponds to the second active state.

It can be maintained, by setting the rule 2, that the terminal device does not change a currently used frequency domain range in the effective period of the MAC signaling or the physical layer signaling, but changes the used frequency domain range based on an indication of the resource allocation information after the MAC signaling or the physical layer signaling takes effect. Therefore, when switching from the first active state to the second active state, the terminal device can maintain that a manner of resource allocation on a part of control channels in the first time unit does not change with a change of the active state, so that smooth switching can be implemented during the change of the active state. For example, a total bandwidth is 40 mega M, a bandwidth originally allocated to the NR system is 40 M, and a bandwidth originally allocated to the LTE system is 20 M. When the last 20 M bandwidth is occupied by the current LTE system, only the first 20 M bandwidth can be used by the NR system. After the cell in the LTE system deployed on the first carrier is disabled, the full bandwidth (namely, 40 M) on the first carrier can be used by the NR system. However, after the cell in the LTE system is disabled, in a process in which the terminal device is notified of the MAC signaling, the terminal device first still continues to use the first 20 M bandwidth, and then uses the full 40 M bandwidth after the MAC signaling takes effect. In this way, smooth switching can be ensured during a bandwidth change.

Optionally, in some embodiments of this application, in this application, it may be considered that when the terminal device is notified of a change of the active state by using the MAC signaling or the physical layer signaling, the access network device may have delivered signaling whose status changes to the terminal device, but the terminal device does not receive the delivered signaling, and still continues to maintain a current scheduling manner and a current receiving manner, thereby causing inconsistent understanding of the active state of the first carrier by the access network device and the terminal device. To resolve this problem, in the rule 1, the currently used resource configuration keeps unchanged during switching of the active state, so that it can continue to maintain that the terminal device properly receives the control channel, and receiving of the control channel can be used to schedule receiving of the data channel during switching of the active state, to avoid unsmooth switching due to the inconsistent understanding of the active state of the first carrier by the access network device and the terminal device.

Optionally, in some embodiments of this application, when the LTE system and the NR system are deployed on the first carrier, scheduling may be performed in the LTE system based on a short transmission time interval TTI, and scheduling may be performed in the NR system based on a mini-slot. Because a time granularity scheduled in the foregoing two communications systems in which the first carrier is multiplexed affects complexity of monitoring the control channel, an LTE-PDCCH is bypassed in a first slot, and a first symbol in a second slot is used as a start control symbol on which an NR-PDCCH is received to ensure that the first carrier is normally multiplexed in the LTE system and the NR system, and an idle resource in the LTE system further needs to be dynamically scheduled to improve resource utilization. As shown in FIG. 4-1, the NR-PDCCH is received starting from #3 in a first slot, and the NR-PDCCH is received starting from a first symbol (#0) in a second slot and a slot after the second slot.

In this case, when scheduling is performed in the LTE system based on a TTI and scheduling is performed in the NR system based on the mini-slot, the terminal device may monitor, at an equal time domain interval, a control channel corresponding to the first control information, to reduce complexity of monitoring the control channel by the terminal device in the NR system. For example, the terminal device may be set to monitor an NR-PDCCH once every two symbols, and monitor the NR-PDCCH only on a symbol whose symbol index is an even number in a subframe.

In this application, considering that the NR system multiplexes a resource scheduled based on the short TTI with the LTE system, or one NR-PDSCH is prevented from occupying a part of each of two short TTIs in LTE, to be specific, a symbol occupied by one NR-PDSCH is aligned with one short TTI in LTE in time domain to a greatest extent, and a resource that is not used in the LTE system when a quantity of symbols dynamically indicated by the PCFICH changes is fully used, it may be further specified as follows:

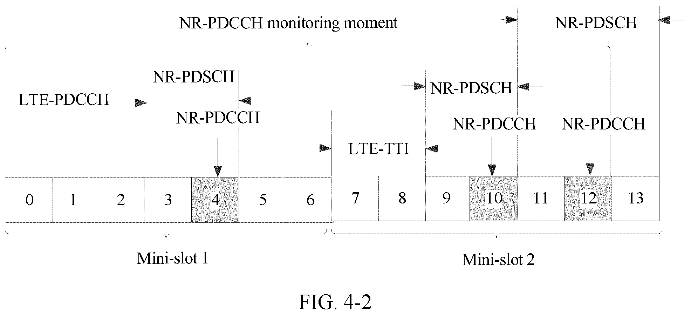

A first start symbol on the NR-PDSCH is earlier than a first start control symbol on an NR-PDCCH corresponding to the NR-PDSCH. For example, as shown in FIG. 4-2, one short TTI in LTE occupies two symbols (including #7 and #8), the NR-PDSCH is received on #9 and #10, and the NR-PDSCH is received on #11 and #12. It can be learned that one NR-PDSCH occupies only two symbols in time domain, and a quantity of the symbols occupied by one NR-PDSCH is equal to a quantity of the symbols occupied by one short TTI in LTE. The NR-PDDCH is monitored on #10, the NR-PDDCH is monitored on #12, and the NR-PDDCH is monitored at an equal symbol interval.

For example, it is specified that in the NR system, the terminal device performs scheduling by using two symbols as one mini-slot, for example, separately performs scheduling by using a symbol whose index is 0 (briefly referred to as #0 below, and other symbols are similar) and #1, #1 and #2, #3 and #4, or the like as one mini-slot. In addition, it is specified that in the NR system, the terminal device monitors the NR-PDCCH on an even-numbered symbol such as #0, #2, or #4. If #0 and #2 are occupied by the LTE system, the terminal device in the NR system can monitor the NR-PDCCH only starting from #4. If the access network device learns that the quantity of symbols dynamically indicated by the PCFICH in the LTE system changes from 3 to 2, the terminal device in the NR system can monitor the NR-PDCCH starting from #2. In this way, the resource that is not used in the LTE system can be fully used, and the resource can also be efficiently multiplexed. It can be learned from the foregoing description that the first start symbol is dynamically indicated and the control channel is monitored at an equal interval, so that the NR system can normally schedule a subframe with the LTE system and flexibly multiplex a resource scheduled based on the short TTI with the LTE system.

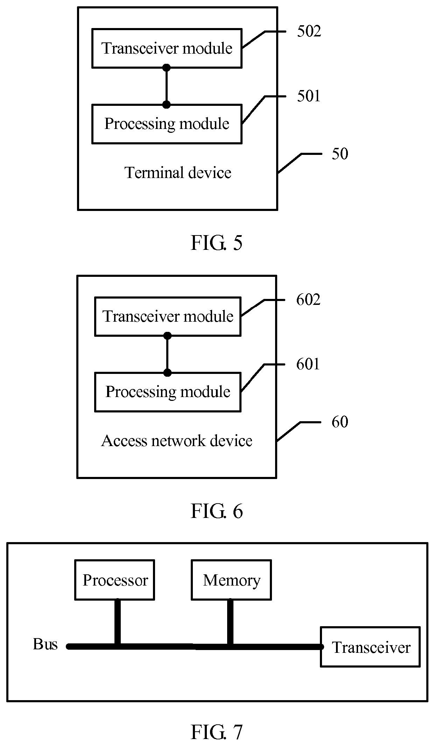

The foregoing describes the data receiving/transmitting method in this embodiment of this application, and the following separately describes a terminal device and an access network device that perform the foregoing method.
1. Referring to FIG. 5, a terminal device 50 is described. The terminal device 90 belongs to an NR system, and the terminal device 50 includes a processing module 501 and a transceiver module 502. The processing module 501 is configured to control a receiving/transmitting operation of the transceiver module 502.

The receiving module 502 is configured to: perform the method in the embodiment corresponding to FIG. 2, to be specific, receive, on a first carrier in a first time unit, first control information sent by an access network device, where the first control information is used to indicate a first start symbol on which a first data channel is received; and
receive, in the first time unit or a time unit after the first time unit, the first data channel on the first carrier starting from the first start symbol.

Compared with an existing mechanism, in this application, the transceiver module 502 may receive, in the first time unit, the first control information dynamically delivered by the access network device, and then receive the first data channel based on the first start symbol indicated by the first control information. In this mechanism, in a process of listening to a channel, the terminal device can listen to a control channel and receive a data channel without being restricted to using some fixed subframes, thereby improving data receiving flexibility.

In some embodiments of this application, the first start symbol is a first candidate symbol or a second candidate symbol, the first candidate symbol is earlier in time domain than a first start control symbol on which the first control information is received, and the second candidate symbol is later than the first start control symbol in time domain, or is aligned with the first start control symbol in time domain.

Before receiving the first control information on the first carrier, the transceiver module 502 is further configured to:
obtain frequency domain configuration information of a control channel corresponding to the first control information, where the frequency domain configuration information includes information indicating a control frequency domain area of the control channel corresponding to the first control information.

The first candidate symbol is in the first time unit; and
the first start symbol is later than a first symbol in the first time unit.

In some embodiments of this application, the first control information is further used to indicate first transmission duration for which the first data channel is received, or indicate an end symbol on which the first data channel is received, and the end symbol is a symbol in the first time unit or a symbol in at least one time unit after the first time unit.

In some embodiments of this application, the transceiver module 502 is further configured to:
receive, on the first carrier in a second time unit, second control information sent by the access network, where the second control information is used to indicate a second start symbol on which a second data channel is received; and
receive, in the second time unit, the second data channel on the first carrier starting from the second start symbol.

In some embodiments of this application, the second time unit meets one of the following items:
the second time unit is later than the first time unit, and belongs to a same time scheduling unit as the first time unit, where the time scheduling unit is a basic scheduling time unit in an LTE system; or
the second time unit is later than the first time unit, and belongs to a different time scheduling unit from the first time unit.

In some embodiments of this application, both a second start control symbol on which the second control information is received and the first start control symbol on which the first control information is received are independently configured by the access network device.

In some embodiments of this application, the second start symbol is later than the second start control symbol in time domain, or is aligned with the second start control symbol in time domain.

In some embodiments of this application, a time domain location of the first start symbol in the first time unit is different from a time domain location of the second start symbol in the second time unit.

In some embodiments of this application, the transceiver module 502 is further configured to:
receive, on the first carrier in the first time unit, third control information sent by the access network device, where the third control information is used to indicate a third start symbol on which a third data channel is received; and receive the third data channel on the first carrier starting from the third start symbol.

In some embodiments of this application, the first control information is received based on a resource configuration, and the third control information is received based on another resource configuration.

The resource configuration includes at least one of the first start control symbol on which the first control information is received, a subcarrier spacing, and information about rate matching of a reference signal; and the another resource configuration includes at least one of a start control symbol on which the third control information is received, a subcarrier spacing, and information about rate matching of a reference signal.

In some embodiments of this application, the resource configuration keeps unchanged when a status of the first carrier switches between a first active state and a second active state.

The another resource configuration is a first candidate resource configuration or a second candidate resource configuration, the first candidate resource configuration corresponds to the first active state, and the second candidate resource configuration corresponds to the second active state.

In some embodiments of this application, the first active state or the second active state is sent to the terminal device by using media access control MAC signaling or physical layer signaling.

In some embodiments of this application, the first control information includes first resource allocation information of the first data channel, the second control information includes second resource allocation information of the second data channel, and the third control information includes third resource allocation information of the third data channel.

An indication of the first resource allocation information is based on a first frequency domain range of the first carrier, an indication of the second resource allocation information is based on a second frequency domain range of the first carrier, and an indication of the third resource allocation information is based on a third frequency domain range of the first carrier.

Optionally, the first frequency domain range is different from the second frequency domain range, and/or the first frequency domain range is different from the third frequency domain range.

In some embodiments of this application, the first frequency domain range keeps unchanged when the status of the first carrier switches between the first active state and the second active state; and the second frequency domain range is a first candidate frequency domain range or a second candidate frequency domain range, the first candidate frequency domain range corresponds to the first active state, and the second candidate frequency domain range corresponds to the second active state.

In some embodiments of this application, when scheduling is performed in the NR system based on a mini-slot, the transceiver module 502 is specifically configured to:
monitor, on nonconsecutive symbols in time domain, a control channel corresponding to the first control information, for example, may monitor, at equal time domain intervals, the control channel corresponding to the first control information.

2. Referring to FIG. 6, an access network device 60 is described. The access network device belongs to a new radio NR system, and the access network device 60 may be configured to schedule a terminal device in the NR system. The access network device 60 includes a processing module 601 and a transceiver module 602. The processing module 601 is configured to control a receiving/transmitting operation of the transceiver module.

The processing module 601 is configured to generate first control information.

The transceiver module 602 is configured to: send, to the terminal device on a first carrier in a first time unit, the first control information generated by the processing module 601, where the first control information is used to instruct the terminal device to receive, in the first time unit or a time unit after the first time unit, the first data channel on the first carrier starting from a first start symbol; and
send, in the first time unit, the first data channel on the first carrier starting from the first start symbol.

Compared with an existing mechanism, in this application, after the processing module generates the first control information, the transceiver module 602 dynamically indicates, to the terminal device in each time unit, the first start symbol on which the first data channel is received, so that the terminal device can listen to a control channel and receive a data channel without being restricted to using some fixed subframes, thereby improving data receiving flexibility. In this mechanism, in a process of listening to a channel, the access network device can dynamically perform resource scheduling on the terminal device, so that the terminal device can listen to a control channel and receive a data channel without being restricted to using some fixed subframes, thereby improving data receiving flexibility. This solution may be further combined with a mechanism for receiving data in a fixed subframe. The access network device may dynamically schedule the terminal device in real time based on a current resource allocation status, and may also schedule, when determining that some subframes are idle, these idle subframes to the terminal device for use on the basis of sending signaling or data in the fixed subframe, to reduce waiting duration of the terminal device, improve resource utilization and resource scheduling flexibility, and further improve a resource scheduling mechanism.

In some embodiments of this application, the first start symbol is a first candidate symbol or a second candidate symbol, the first candidate symbol is earlier in time domain than a first start control symbol on which the first control information is received, and the second candidate symbol is later than the first start control symbol in time domain, or is aligned with the first start control symbol in time domain.

In some embodiments of this application, the first candidate symbol is in the first time unit; and
the first start symbol is later than a first symbol in the first time unit.

In some embodiments of this application, the first control information is further used to indicate first transmission duration for which the first data channel is received, or indicate an end symbol on which the first data channel is received, and the end symbol is a symbol in the first time unit or a symbol in at least one time unit after the first time unit.

In some embodiments of this application, the transceiver module 602 is further configured to:
send second control information to the terminal device on the first carrier in a second time unit, where the second control information is used to instruct the terminal device to receive, in the second time unit, a second data channel on the first carrier starting from a second start symbol.

In some embodiments of this application, the second time unit meets one of the following items:
the second time unit is later than the first time unit, and belongs to a same time scheduling unit as the first time unit, where the time scheduling unit is a basic scheduling time unit in an LTE system; or
the second time unit is later than the first time unit, and belongs to a different time scheduling unit from the first time unit.

In some embodiments of this application, both a second start control symbol on which the second control information is sent and the first start control symbol on which the first control information is received are independently configured by the access network device.

In some embodiments of this application, the second start symbol is later than the second start control symbol in time domain, or is aligned with the second start control symbol in time domain.

In some embodiments of this application, a time domain location of the first start symbol in the first time unit is different from a time domain location of the second start symbol in the second time unit.

In some embodiments of this application, the transceiver module 602 is further configured to:
send third control information to the terminal device on the first carrier in the first time unit, where the third control information is used to instruct the terminal device to receive, in the first time unit, a third data channel on the first carrier starting from a third start symbol.

In some embodiments of this application, before the access network device sends the first control information to the terminal device on the first carrier, the transceiver module 602 is further configured to:
send, to the terminal device, a resource configuration used by the terminal device to receive the first control information, where the resource configuration includes at least one of the first start control symbol on which the terminal device receives the first control information, a subcarrier spacing, and information about rate matching of a reference signal.

In some embodiments of this application, before the access network device sends the third control information to the terminal device on the first carrier, the transceiver module 602 is further configured to:
send, to the terminal device, another resource configuration used by the terminal device to receive the third control information, where the another resource configuration includes at least one of a start control symbol on which the terminal device receives the third control information, a subcarrier spacing, and information about rate matching of a reference signal.

In some embodiments of this application, the transceiver module 602 is further configured to:
notify the terminal device of a first active state or a second active state in the first time unit by using media access control MAC signaling or physical layer signaling, where
the resource configuration keeps unchanged when a status of the first carrier switches between the first active state and the second active state; and
the another resource configuration is a first candidate resource configuration or a second candidate resource configuration, the first candidate resource configuration corresponds to the first active state, and the second candidate resource configuration corresponds to the second active state.

In some embodiments of this application, the first control information includes first resource allocation information of the first data channel, the second control information includes second resource allocation information of the second data channel, and the third control information includes third resource allocation information of the third data channel.

An indication of the first resource allocation information is based on a first frequency domain range of the first carrier, an indication of the second resource allocation information is based on a second frequency domain range of the first carrier, and an indication of the third resource allocation information is based on a third frequency domain range of the first carrier.

In some embodiments of this application, the first frequency domain range is different from the second frequency domain range, and/or the first frequency domain range is different from the third frequency domain range.

In some possible designs, the transceiver module 602 is further configured to perform the following operation:
the first frequency domain range keeps unchanged when the status of the first carrier switches between the first active state and the second active state; and the second frequency domain range is a first candidate frequency domain range or a second candidate frequency domain range, the first candidate frequency domain range corresponds to the first active state, and the second candidate frequency domain range corresponds to the second active state.

It should be noted that for definitions of technical features such as a first carrier, a first start symbol, a first start control symbol, a data channel, a control channel, a first resource configuration, a second resource configuration, a third resource configuration, a first frequency domain range, a second frequency domain range, a third frequency domain range, a first active state, a second active state, first resource allocation information, second resource allocation information, third resource allocation information, and information about rate matching of a reference signal, refer to the foregoing method embodiments corresponding to FIG. 2 to FIG. 4-2, and the communications devices in the embodiments of this application can perform content described in any one of the foregoing method embodiments (including the embodiments shown in FIG. 2 to FIG. 4-2). Details are not described herein again.

It should be noted that in the foregoing embodiments (including the foregoing embodiments corresponding to FIG. 5 and FIG. 6) of the present invention, physical devices corresponding to all transceiver modules (including a receiving module and a sending module) may be transceivers (including a receiver and a transmitter), and physical devices corresponding to all processing modules may be processors. The apparatus shown in FIG. 5 or FIG. 6 may have a structure shown in FIG. 7. When an apparatus has the structure shown in FIG. 7, a processor and a transceiver in FIG. 7 implement functions that are the same as or similar to those of the processing module and the transceiver module provided in the foregoing apparatus embodiment corresponding to the apparatus, and a memory in FIG. 7 stores program code that needs to be invoked when the processor performs the foregoing data receiving/transmitting method.

In the foregoing embodiments, the description of each embodiment has respective focuses. For a part that is not described in detail in an embodiment, refer to related descriptions in other embodiments.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all of the modules may be selected based on actual requirements to achieve the objectives of the solutions of the embodiments.

In addition, functional modules in each embodiments of the embodiment of this application may be integrated into one processing module, or each of the modules may exist alone physically, or two or more modules are integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, the technical solutions of the embodiments of this application essentially, or the part contributing to the prior art, all or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes any medium that can store program code, such as a USB flash drive, a removable hard disk, a read-only memory (English full name: Read-Only Memory, ROM for short), a random access memory (English full name: Random Access Memory, RAM for short), a magnetic disk, or an optical disc.

The technical solutions provided in the embodiments of this application are described in detail above. The principle and implementation in the embodiments of this application are described herein through specific examples. The description about the foregoing embodiments is merely provided to help understand the method and core ideas of the present invention.

## Claims

1. A data receiving method, wherein the method is applied to a terminal device in a new radio NR system, and the method comprises:
receiving (202), by the terminal device on a first carrier in a first time unit, first control information sent by an access network device, wherein the first control information is used to indicate a first start symbol on which a first data channel is received; and
receiving (204), by the terminal device in the first time unit or a time unit after the first time unit, the first data channel on the first carrier starting from the first start symbol,
**characterized in that** the method further comprises:
receiving, by the terminal device on the first carrier in a second time unit, second control information sent by the access network, wherein the second control information is used to indicate a second start symbol on which a second data channel is received; and
receiving, by the terminal device in the second time unit, the second data channel on the first carrier starting from the second start symbol, wherein
both a second start control symbol on which the second control information is received and a first start control symbol on which the first control information is received are independently configured by the access network device.

2. The method according to claim 1, wherein the first start symbol is a first candidate symbol or a second candidate symbol, the first candidate symbol is earlier in time domain than a first start control symbol on which the first control information is received, and the second candidate symbol is later than the first start control symbol in time domain, or is aligned with the first start control symbol in time domain.

3. The method according to claim 1 to 2, wherein before the receiving, by the terminal device, first control information on a first carrier, the method further comprises:
obtaining, by the terminal device, frequency domain configuration information of a control channel corresponding to the first control information, wherein the frequency domain configuration information comprises information indicating a control frequency domain area of the control channel corresponding to the first control information.

4. The method according to claim 2 or 3, wherein the first candidate symbol is in the first time unit; and
the first start symbol is later than a first symbol in the first time unit.

5. The method according to claim 1, wherein the first control information is further used to indicate first transmission duration for which the first data channel is received, or indicate an end symbol on which the first data channel is received, and the end symbol is a symbol in the first time unit or a symbol in at least one time unit after the first time unit.

6. The method according to any one of claims 1 to 5, wherein the second time unit is later than the first time unit, and belongs to a different time scheduling unit from the first time unit.

7. The method according to claim 1 wherein the second start symbol is later than the second start control symbol in time domain, or is aligned with the second start control symbol in time domain.

8. The method according to any one of claims 1, 6 or 7, wherein a time domain location of the first start symbol in the first time unit is different from a time domain location of the second start symbol in the second time unit.

9. The method according to any one of claims 1 to 8, wherein the method further comprises:
receiving, by the terminal device on the first carrier in the first time unit, third control information sent by the access network device, wherein the third control information is used to indicate a third start symbol on which a third data channel is received; and
receiving, by the terminal device, the third data channel on the first carrier starting from the third start symbol.

10. A data sending method, wherein the method is applied to an access network device that schedules a terminal device in a new radio NR system, and the method comprises:
sending (201), by the access network device, first control information to the terminal device on a first carrier in a first time unit, wherein the first control information is used to instruct the terminal device to receive, in the first time unit or a time unit after the first time unit, the first data channel on the first carrier starting from a first start symbol; and
sending (203), by the access network device in the first time unit, the first data channel on the first carrier starting from the first start symbol,
**characterized in that** the method further comprises:
sending, by the access network device, second control information to the terminal device on the first carrier in a second time unit, wherein the second control information is used to instruct the terminal device to receive, in the second time unit, a second data channel on the first carrier starting from a second start symbol,
sending, by the access network device in the second time unit, the second data channel on the first carrier starting from the second start symbol, wherein
the access network device independently configures, for the terminal device, both a second start control symbol on which the second control information is sent and a first start control symbol on which the first control information is sent.

11. A terminal device (50), wherein the terminal device (50) comprises a processor (501), a transceiver (502), and a memory; and
the memory is configured to store an instruction, the processor (501) is configured to: execute the instruction stored in the memory, and control the transceiver (502) to receive and send a signal, and when the processor (501) executes the instruction stored in the memory, the communications device is configured to perform the method according to any one of claims 1 to 9.

12. An access network device (60), wherein the access network device (60) comprises a processor (601), a transceiver (602), and a memory; and
the memory is configured to store an instruction, the processor (601) is configured to: execute the instruction stored in the memory, and control the transceiver (602) to receive and send a signal, and when the processor (601) executes the instruction stored in the memory, the communications device is configured to perform the method according to claim 10.

13. A computer storage medium, comprising an instruction, wherein when running on a computer, the computer storage medium enables the computer to perform the method according to any one of claims 1 to 9, or to perform the method according to claim 10.

## Patentansprüche

1. Datenempfangsverfahren, wobei das Verfahren auf eine Endgerätevorrichtung in einem New-Radio-System, NR-System, angewandt wird und das Verfahren Folgendes umfasst:
Empfangen (202), durch die Endgerätevorrichtung auf einem ersten Träger in einer ersten Zeiteinheit, erster Steuerungsinformationen, die durch eine Zugriffsnetzvorrichtung gesendet werden, wobei die ersten Steuerungsinformationen dazu verwendet werden, ein erstes Startsymbol anzugeben, auf dem ein erster Datenkanal empfangen wird; und
Empfangen (204), durch die Endgerätevorrichtung in der ersten Zeiteinheit oder einer Zeiteinheit nach der ersten Zeiteinheit, des ersten Datenkanals auf dem ersten Träger, beginnend mit dem ersten Startsymbol, **dadurch gekennzeichnet, dass** das Verfahren ferner Folgendes umfasst:
Empfangen, durch die Endgerätevorrichtung auf dem ersten Träger in einer zweiten Zeiteinheit, zweiter Steuerungsinformationen, die durch das Zugriffsnetz gesendet werden, wobei die zweiten Steuerungsinformationen dazu verwendet werden, ein zweites Startsymbol anzugeben, auf dem ein zweiter Datenkanal empfangen wird; und
Empfangen, durch die Endgerätevorrichtung in der zweiten Zeiteinheit, des zweiten Datenkanals auf dem ersten Träger, beginnend mit dem zweiten Startsymbol, wobei
sowohl ein zweites Startsteuerungssymbol, auf dem die zweiten Steuerungsinformationen empfangen werden, als auch ein erstes Startsteuerungssymbol, auf dem die ersten Steuerungsinformationen empfangen werden, durch die Zugriffsnetzvorrichtung unabhängig konfiguriert wird.

2. Verfahren nach Anspruch 1, wobei das erste Startsymbol ein erstes in Betracht kommendes Symbol oder ein zweites in Betracht kommendes Symbol ist, das erste in Betracht kommende Symbol in einer Zeitdomäne früher als ein erstes Startsteuerungssymbol ist, auf dem die ersten Steuerungsinformationen empfangen werden, und das zweite in Betracht kommende Symbol in der Zeitdomäne später als das erste Startsteuerungssymbol ist oder in der Zeitdomäne mit dem ersten Startsteuerungssymbol ausgerichtet ist.

3. Verfahren nach Anspruch 1 bis 2, wobei das Verfahren vor dem Empfangen, durch die Endgerätevorrichtung, erster Steuerungsinformationen auf einem ersten Träger ferner Folgendes umfasst:
Erlangen, durch die Endgerätevorrichtung, von Frequenzdomänenkonfigurationsinformationen eines Steuerungskanals, der den ersten Steuerungsinformationen entspricht, wobei die Frequenzdomänenkonfigurationsinformationen Informationen umfassen, die einen Steuerungsfrequenzdomänenbereich des Steuerungskanals angeben, der den ersten Steuerungsinformationen entspricht.

4. Verfahren nach Anspruch 2 oder 3, wobei sich das erste in Betracht kommende Symbol in der ersten Zeiteinheit befindet; und das erste Startsymbol in der ersten Zeiteinheit später als ein erstes Symbol ist.

5. Verfahren nach Anspruch 1, wobei die ersten Steuerungsinformationen ferner dazu verwendet werden, eine erste Übertragungsdauer anzugeben, für die der erste Datenkanal empfangen wird, oder ein Endsymbol anzugeben, auf dem der erste Datenkanal empfangen wird, und das Endsymbol ein Symbol in der ersten Zeiteinheit oder ein Symbol in mindestens einer Zeiteinheit nach der ersten Zeiteinheit ist.

6. Verfahren nach einem der Ansprüche 1 bis 5, wobei die zweite Zeiteinheit später als die erste Zeiteinheit ist und zu einer anderen Zeitplanungseinheit als der ersten Zeiteinheit gehört.

7. Verfahren nach Anspruch 1, wobei das zweite Startsymbol in der Zeitdomäne später als das zweite Startsteuerungssymbol ist oder in der Zeitdomäne mit dem zweiten Startsteuerungssymbol ausgerichtet ist.

8. Verfahren nach einem der Ansprüche 1, 6 oder 7, wobei sich eine Zeitdomänenposition des ersten Startsymbols in der ersten Zeiteinheit von einer Zeitdomänenposition des zweiten Startsymbols in der zweiten Zeiteinheit unterscheidet.

9. Verfahren nach einem der Ansprüche 1 bis 8, wobei das Verfahren ferner Folgendes umfasst:
Empfangen, durch die Endgerätevorrichtung auf dem ersten Träger in der ersten Zeiteinheit, dritter Steuerungsinformationen, die durch die Zugriffsnetzvorrichtung gesendet werden, wobei die dritten Steuerungsinformationen dazu verwendet werden, ein drittes Startsymbol anzugeben, auf dem ein dritter Datenkanal empfangen wird; und
Empfangen, durch die Endgerätevorrichtung, des dritten Datenkanals auf dem ersten Träger, beginnend mit dem dritten Startsymbol.

10. Datensendeverfahren, wobei das Verfahren auf eine Endgerätevorrichtung angewandt wird, die eine Endgerätevorrichtung in einem New-Radio-System, NR-System, plant, und das Verfahren Folgendes umfasst:
Senden (201), durch die Zugriffsnetzvorrichtung, erster Steuerungsinformationen an die Endgerätevorrichtung auf einem ersten Träger in einer ersten Zeiteinheit, wobei die ersten Steuerungsinformationen dazu verwendet werden, die Endgerätevorrichtung anzuweisen, in der ersten Zeiteinheit oder einer Zeiteinheit nach der ersten Zeiteinheit den ersten Datenkanal auf dem ersten Träger, beginnend mit einem ersten Startsymbol, zu empfangen; und
Senden (203), durch die Zugriffsnetzvorrichtung in der ersten Zeiteinheit, des ersten Datenkanals auf dem ersten Träger, beginnend mit dem ersten Startsymbol, **dadurch gekennzeichnet, dass** das Verfahren ferner Folgendes umfasst:
Senden, durch die Zugriffsnetzvorrichtung, zweiter Steuerungsinformationen an die Endgerätevorrichtung auf dem ersten Träger in einer zweiten Zeiteinheit, wobei die zweiten Steuerungsinformationen dazu verwendet werden, die Endgerätevorrichtung anzuweisen, in der zweiten Zeiteinheit einen zweiten Datenkanal auf dem ersten Träger, beginnend mit einem zweiten Startsymbol, zu empfangen,
Senden, durch die Zugriffsnetzvorrichtung in der zweiten Zeiteinheit, des zweiten Datenkanals auf dem ersten Träger, beginnend mit dem zweiten Startsymbol, wobei
die Zugriffsnetzvorrichtung für die Endgerätevorrichtung sowohl ein zweites Startsteuerungssymbol, auf dem die zweiten Steuerungsinformationen gesendet werden, als auch ein erstes Startsteuerungssymbol, auf dem die ersten Steuerungsinformationen gesendet werden, unabhängig konfiguriert.

11. Endgerätevorrichtung (50), wobei die Endgerätevorrichtung (50) einen Prozessor (501), einen Sendeempfänger (502) und einen Speicher umfasst; und
der Speicher dazu konfiguriert ist, eine Anweisung zu speichern, der Prozessor (501) zu Folgendem konfiguriert ist: Ausführen der Anweisung, die in dem Speicher gespeichert ist, und Steuern des Sendeempfängers (502), um ein Signal zu empfangen und zu senden, und, wenn der Prozessor (501) die Anweisung, die in dem Speicher gespeichert ist, ausführt, die Kommunikationsvorrichtung dazu konfiguriert ist, das Verfahren nach einem der Ansprüche 1 bis 9 durchzuführen.

12. Zugriffsnetzvorrichtung (60), wobei die Zugriffsnetzvorrichtung (60) einen Prozessor (601), einen Sendeempfänger (602) und einen Speicher umfasst; und
der Speicher dazu konfiguriert ist, eine Anweisung zu speichern, der Prozessor (601) zu Folgendem konfiguriert ist: Ausführen der Anweisung, die in dem Speicher gespeichert ist, und Steuern des Sendeempfängers (602), um ein Signal zu empfangen und zu senden, und, wenn der Prozessor (601) die Anweisung, die in dem Speicher gespeichert ist, ausführt, die Kommunikationsvorrichtung dazu konfiguriert ist, das Verfahren nach Anspruch 10 durchzuführen.

13. Computerspeichermedium, umfassend eine Anweisung, wobei das Computerspeichermedium, wenn es auf einem Computer läuft, es dem Computer ermöglicht, das Verfahren nach einem der Ansprüche 1 bis 9 auszuführen oder das Verfahren nach Anspruch 10 durchzuführen.

## Revendications

1. Procédé de réception de données, dans lequel le procédé est appliqué à un dispositif terminal dans un système de nouvelle radio NR, et le procédé comprend :
la réception (202), par le dispositif terminal sur une première porteuse dans une première unité de temps, de premières informations de commande envoyées par un dispositif de réseau d'accès, dans lequel les premières informations de commande sont utilisées pour indiquer un premier symbole de départ sur lequel un premier canal de données est reçu ; et
la réception (204), par le dispositif terminal dans la première unité de temps ou une unité de temps après la première unité de temps, du premier canal de données sur la première porteuse commençant par le premier symbole de départ, **caractérisée en ce que** le procédé comprend en outre :
la réception, par le dispositif terminal sur la première porteuse dans une seconde unité de temps, de deuxièmes informations de commande envoyées par le réseau d'accès, dans lequel les deuxièmes informations de commande sont utilisées pour indiquer un deuxième symbole de départ sur lequel un deuxième canal de données est reçu ; et
la réception, par le dispositif terminal dans la seconde unité de temps, du deuxième canal de données sur la première porteuse commençant à partir du deuxième symbole de départ, dans lequel
à la fois un second symbole de commande de départ sur lequel les deuxièmes informations de commande sont reçues et un premier symbole de commande de départ sur lequel les premières informations de commande sont reçues sont configurés indépendamment par le dispositif de réseau d'accès.

2. Procédé selon la revendication 1, dans lequel le premier symbole de départ est un premier symbole candidat ou un second symbole candidat, le premier symbole candidat est antérieur dans le domaine temporel à un premier symbole de commande de départ sur lequel les premières informations de commande sont reçues, et le second symbole candidat est postérieur au premier symbole de commande de départ dans le domaine temporel, ou est aligné avec le premier symbole de commande de départ dans le domaine temporel.

3. Procédé selon la revendication 1 ou 2, dans lequel avant la réception, par le dispositif terminal, de premières informations de commande sur une première porteuse, le procédé comprend en outre :
l'obtention, par le dispositif terminal, d'informations de configuration de domaine fréquentiel d'un canal de commande correspondant aux premières informations de commande, dans lequel les informations de configuration dans le domaine fréquentiel comprennent des informations indiquant une zone de domaine fréquentiel de commande du canal de commande correspondant aux premières informations de commande.

4. Procédé selon la revendication 2 ou 3, dans lequel le premier symbole candidat est dans la première unité de temps ; et
le premier symbole de départ est postérieur à un premier symbole dans la première unité de temps.

5. Procédé selon la revendication 1, dans lequel les premières informations de commande sont en outre utilisées pour indiquer la première durée de transmission pendant laquelle le premier canal de données est reçu, ou pour indiquer un symbole de fin sur lequel le premier canal de données est reçu, et le symbole de fin est un symbole dans la première unité de temps ou un symbole dans au moins une unité de temps après la première unité de temps.

6. Procédé selon l'une quelconque des revendications 1 à 5, dans lequel la seconde unité de temps est postérieure à la première unité de temps, et appartient à une unité de planification temporelle différente de la première unité de temps.

7. Procédé selon la revendication 1 dans lequel le deuxième symbole de départ est postérieur au second symbole de commande de départ dans le domaine temporel, ou est aligné avec le second symbole de commande de départ dans le domaine temporel.

8. Procédé selon l'une quelconque des revendications 1, 6 ou 7, dans lequel la position de domaine temporel du premier symbole de départ dans la première unité de temps est différente d'une position de domaine temporel du deuxième symbole de départ dans la seconde unité de temps.

9. Procédé selon l'une quelconque des revendications 1 à 8, dans lequel le procédé comprend en outre :
la réception, par le dispositif terminal sur la première porteuse dans la première unité de temps, de troisièmes informations de commande envoyées par le dispositif de réseau d'accès, dans lequel les troisièmes informations de commande sont utilisées pour indiquer un troisième symbole de départ sur lequel un troisième canal de données est reçu ; et
la réception, par le dispositif terminal, du troisième canal de données sur la première porteuse commençant à partir du troisième symbole de départ.

10. Procédé d'envoi de données, dans lequel le procédé est appliqué à un dispositif de réseau d'accès qui planifie un dispositif terminal dans un système de nouvelle radio NR, et le procédé comprend :
l'envoi (201), par le dispositif de réseau d'accès, de premières informations de commande au dispositif terminal sur une première porteuse dans une première unité de temps, dans lequel les premières informations de commande sont utilisées pour ordonner au terminal de recevoir, dans la première unité de temps ou une unité de temps après la première unité de temps, le premier canal de données sur la première porteuse commençant à partir d'un premier symbole de départ ; et
l'envoi (203), par le dispositif de réseau d'accès dans la première unité de temps, du premier canal de données sur la première porteuse commençant à partir du premier symbole de départ, **caractérisé en ce que** le procédé comprend en outre :
l'envoi, par le dispositif de réseau d'accès, de deuxièmes informations de commande au dispositif terminal sur la première porteuse dans une seconde unité de temps, dans lequel les deuxièmes informations de commande sont utilisées pour ordonner au dispositif terminal de recevoir, dans la seconde unité de temps, un deuxième canal de données sur la première porteuse commençant à partir d'un deuxième symbole de départ,
l'envoi, par le dispositif de réseau d'accès dans la seconde unité de temps, du deuxième canal de données sur la première porteuse commençant par le deuxième symbole de départ, dans lequel
le dispositif de réseau d'accès configure indépendamment, pour le dispositif terminal, à la fois un second symbole de commande de départ sur lequel les deuxièmes informations de commande sont envoyées et un premier symbole de commande de départ sur lequel les premières informations de commande sont envoyées.

11. Dispositif terminal (50), dans lequel le dispositif terminal (50) comprend un processeur (501), un émetteur-récepteur (502), et une mémoire ; et
la mémoire est configurée pour stocker une instruction, le processeur (501) est configuré pour : exécuter l'instruction stockée dans la mémoire, et commander l'émetteur-récepteur (502) pour recevoir et envoyer un signal, et lorsque le processeur (501) exécute l'instruction stockée dans la mémoire, le dispositif de communication est configuré pour réaliser le procédé selon l'une quelconque des revendications 1 à 9.

12. Dispositif de réseau d'accès (60), dans lequel le dispositif de réseau d'accès (60) comprend un processeur (601), un émetteur-récepteur (602), et une mémoire ; et
la mémoire est configurée pour stocker une instruction, le processeur (601) est configuré pour : exécuter l'instruction stockée dans la mémoire, et commander l'émetteur-récepteur (602) pour recevoir et envoyer un signal, et lorsque le processeur (601) exécute l'instruction stockée dans la mémoire, le dispositif de communication est configuré pour réaliser le procédé selon la revendication 10.

13. Support de stockage informatique, comprenant une instruction, dans lequel lorsqu'elle est exécutée sur un ordinateur, le support de stockage informatique permet à l'ordinateur de réaliser le procédé selon l'une quelconque des revendications 1 à 9, ou de réaliser le procédé selon la revendication 10.
